# EUROPEAN PATENT SPECIFICATION

(11) **EP 2 204 423 B1**
(45) Date of publication and mention of the grant of the patent: **19.08.2015**
(21) Application number: 08829905.2
(22) Date of filing: 02.09.2008
(51) Int. Cl.: C09D 133/04, A01N 43/80, A01N 55/02, A01N 55/08, A01N 59/16, A01N 59/20, A01P 3/00, A01P 17/00, B05D 5/00, B05D 7/00, C09D 5/16, C09D 7/12, C09D 133/02, C09D 143/04, C09D 167/00

(54) **ANTIFOULING COATING COMPOSITION, ANTIFOULING COATING FILM, SUBSTRATES WITH THE FILM, FOULING-RESISTANT SUBSTRATES, PROCESS FOR FORMING THE FILM ON THE SURFACES OF SUBSTRATES, AND METHOD FOR INHIBITING SUBSTRATE FROM FOULING**
ANTIFOULING-BESCHICHTUNGSZUSAMMENSETZUNG, ANTIFOULING-BESCHICHTUNGSFILM, SUBSTRATE MIT DEM FILM, FOULINGRESISTENTE SUBSTRATE, VERFAHREN ZUR AUSBILDUNG DES FILMS AUF DEN OBERFLÄCHEN VON SUBSTRATEN SOWIE VERFAHREN ZUR SUBSTRATINHIBIERUNG GEGENÜBER FOULING
COMPOSITION DE REVÊTEMENT ANTI-SALISSURES, FILM DE REVÊTEMENT ANTI-SALISSURES, SUBSTRATS AVEC LE FILM, SUBSTRATS RÉSISTANTS AUX SALISSURES, PROCÉDÉ DE FORMATION DU FILM SUR LES SURFACES DES SUBSTRATS ET PROCÉDÉ POUR EMPÊCHER LE SUBSTRAT DE SE SALIR

(30) Priority: 07.09.2007 JP 2007232573
(43) Date of publication of application: 07.07.2010
(73) Proprietor: CHUGOKU MARINE PAINTS, LTD., Ohtake-shi Hiroshima 739-0652 (JP)
(72) Inventor: NIIMOTO, Jyunji, Ohtake-shi Hiroshima 739-0652 (JP)
(74) Representative: Hoffmann Eitle
(86) International application number: PCT/JP2008/065705
(87) International publication number: WO 2009/031509

(56) References cited:
- WO-A1-97/09356
- WO-A1-97/09357
- WO-A1-2007/074656
- JP-A- 06 212 099
- JP-A- 2000 234 072
- JP-A- 2000 273 366
- JP-A- 2001 040 274
- JP-A- 2001 323 308
- JP-A- 2005 097 400

## Description

### TECHNICAL FIELD

The present invention relates to an antifouling coating composition, an antifouling coating film, a substrate with a coating film, an antifouling substrate, a method for forming a coating film on a surface of a substrate and a method for preventing a substrate from fouling.

More particularly, the invention relates to an antifouling coating composition having characteristics that when a coating film composed of a coating material obtained from the composition is formed on a surface of a ship's hull or the like, synergistic effect of improvement in antibacterial action and improvement in renewal of coating film is exhibited to effectively prevent adhesion of marine organisms, an antifouling coating film, a substrate with a coating film, an antifouling substrate, a method for forming a coating film on a surface of a substrate and a method for preventing a substrate from fouling.

### BACKGROUND ART

If ships' bottoms, underwater structures, fishing nets, etc. are exposed to water for a long period of time, various aquatic organisms, e.g., animals such as oysters, mussels and barnacles, plants such as laver, and bacteria, adhere and propagate on them, and thereby, their appearances are marred and their functions are sometimes impaired.

Especially when such aquatic organisms adhere and propagate on a ship's bottom, surface roughness of the whole of the ship is increased to sometimes induce lowering of velocity of the ship, increase of fuel cost, etc. Further, removal of such aquatic organisms from the ship' s bottom needs much labor and much working time. If bacteria adhere and propagate on an underwater structure and slime (sludge-like substance) further adheres thereto, rotting is liable to take place, or if large fouling organisms adhere and propagate on a surface of an underwater structure such as a steel structure and they do damage to an anticorrosive coating film of the underwater structure, strength and the function of the underwater structure are lowered to sometimes cause damages such as marked shortening of life.

In order to inhibit such damages, ships' bottoms, etc. have been coated with various antifouling coating materials in the past, and such various antifouling coating materials as described below have been proposed.

In a patent document 1 (JP 2000-234072 A), an antifouling coating composition comprising a polymerizable unsaturated carboxylic acid zinc salt or copper salt copolymer, and copper and/or an inorganic copper compound having a specific particle diameter is disclosed, and it is also described that this composition may further contain zinc oxide.

In a patent document 2 (JP 2001-40274 A), an antifouling coating composition comprising a polymerizable unsaturated carboxylic acid metal compound component unit-containing copolymer, copper and/or an inorganic copper compound, and a metal having lower oxidation-reduction potential than copper is disclosed, and it is also described that this composition may further contain zinc oxide.

In a patent document 3 (JP 2001-323208 A), an antifouling coating composition comprising a polymerizable unsaturated carboxylic acid metal compound component unit-containing copolymer, copper and/or an inorganic copper compound, metal pyrithiones, and a specific organic antifouling agent is disclosed, and it is also described that this composition may further contain zinc oxide.

In a patent document 4 (JP 2005-97400 A), an antifouling coating composition comprising at least one copolymer selected from the group consisting of a metal-containing copolymer and a polymerizable unsaturated carboxylic acid silyl ester copolymer, surface-treated titanium oxide, and copper and/or an inorganic copper compound is disclosed, and it is also described that this composition may further contain zinc oxide.

As described above, in the patent documents 1 to 4, an antifouling coating composition comprising a metal-containing copolymer and copper and/or an inorganic copper compound and if necessary further containing zinc oxide (zinc white) is disclosed.

In the case where copper and/or an inorganic copper compound and zinc oxide are used in combination in the examples and the comparative examples in these patent documents, their quantitative relationship is determined so that the quantity of zinc oxide may be about 5 parts by weight based on 30 to 40 parts by weight of the copper and/or the inorganic copper compound (zinc oxide content/content of copper and/or inorganic copper compound = about 0.1 to 0.2) in many cases, and even in the example in which the ratio of zinc oxide content to a content of copper and/or inorganic copper compound is the greatest, the zinc oxide/cupric oxide ratio was 10/20 (=0.5) at most (Example 9 of the patent document 2).

In brief, in the conventional antifouling coating compositions, the quantity of zinc oxide that is used when necessary is small as compared with the quantity of the copper and/or the inorganic copper compound, and the technical idea that the zinc oxide is added in an amount nearly equal to that of the copper and/or the inorganic copper compound to achieve enhancement of antifouling properties did not exist at all.
Patent document 1: JP 2000-234072 A
Patent document 2: JP 2001-40274 A
Patent document 3: JP 2001-323208 A
Patent document 4: JP 2005-97400 A

### DISCLOSURE OF THE INVENTION

### PROBLEM TO BE SOLVED BY THE INVENTION

It is an object of the present invention to provide a coating material, particularly a novel antifouling coating composition that is a hydrolyzable antifouling coating composition, and forms an antifouling coating film which is excellent particularly in antibacterial action and renewal of coating film with a good balance between them and can effectively prevent adhesion of marine organisms for a long period of time when it is applied to a surface of a substrate of a ship's hull or the like and then cured.

It is another object of the present invention to provide an antifouling coating film which is obtained by applying and curing the above-mentioned antifouling coating composition, is excellent in antibacterial action and renewal of coating film with a good balance between them and can effectively prevent adhesion of marine organisms for a long period of time, a substrate with a coating film and an antifouling substrate.

It is a further object of the present invention to provide a method for forming a coating film having the above properties on a surface of a substrate safely and efficiently and a method for preventing a substrate from fouling.

### MEANS TO SOLVE THE PROBLEM

As a result of earnest studies, the present inventor has found that when zinc oxide is added to an antifouling coating composition in an amount nearly equal to that of copper and/or an inorganic copper compound, the resulting antifouling coating film is excellent in antibacterial action and renewal of coating film with a good balance between them and can effectively prevent adhesion of marine organisms for a long period of time, and he has accomplished the present invention.

The antifouling coating composition according to the present invention is an antifouling coating composition comprising (A) a hydrolyzable copolymer, (b1) copper and/or an inorganic copper compound and (C) zinc oxide, wherein:
the hydrolyzable copolymer (A) is at least one hydrolyzable copolymer selected from the group consisting of:
   (a1) a metal salt bond-containing copolymer which is an acrylic resin or a polyester resin and has, at the end of a side chain, a group represented by the formula (I):

      -COO-M-O-COR¹ (I)

      wherein M is zinc or copper, and R¹ is an organic group,
      with the proviso that the case wherein R¹ is -CH=CH₂ or -C (CH₃) =CH₂ is excluded,
   (a2) a metal salt bond-containing copolymer having
      a component unit (a21) derived from a monomer (a21) represented by the formula (II):

      CH₂=C (R²)-COO-M-O-CO-C(R²)=CH₂ (II)

      wherein M is zinc or copper, and each R² is independently a hydrogen atom or a methyl group, and
      a component unit (a22) derived from other unsaturated monomer (a22) copolymerizable with the monomer (a21), and
   (a3) a silyl ester copolymer having
      a component unit (a31) derived from a monomer (a31) represented by the formula (III):

      R⁷-CH=C(R³)-COO-SiR⁴R⁵R⁶ (III)

      wherein R³ is a hydrogen atom or a methyl group,
      R⁴, R⁵ and R⁶ are each independently a hydrocarbon group, and
      R⁷ is a hydrogen atom or R⁸-O-CO- (wherein R⁸ is an organic group or a silyl group represented by -SiR⁹R¹⁰R¹¹, and R⁹, R¹⁰ and R¹¹ are each independently a hydrocarbon group), and
      a component unit (a32) derived from other unsaturated monomer (a32) copolymerizable with the monomer (a31), and
      (1) the content of the copper and/or the inorganic copper compound (b1) is in the range of 100 to 400 parts by weight, and the content of the zinc oxide (C) is in the range of 50 to 350 parts by weight, each content being based on 100 parts by weight of the hydrolyzable copolymer (A), and
      (2) the weight ratio of the zinc oxide (C) to the copper and/or the inorganic copper compound (b1) (zinc oxide (C) / (copper and/or inorganic copper compound (b1))) is in the range of 0.8 to 1.2.

In the present invention, it is preferable that
(1) the content of the copper and/or the inorganic copper compound (b1) is in the range of 100 to 350 parts by weight, and the content of the zinc oxide (C) is in the range of 75 to 350 parts by weight, each content being based on 100 parts by weight of the hydrolyzable copolymer (A), and
(2) the weight ratio of the zinc oxide (C) to the copper and/or the inorganic copper compound (b1) (zinc oxide (C) / (copper and/or inorganic copper compound (b1))) is in the range of 0.8 to 1.0; and
it is more preferable that
(1) the content of the copper and/or the inorganic copper compound (b1) is in the range of 100 to 300 parts by weight, and the content of the zinc oxide (C) is in the range of 100 to 350 parts by weight, each content being based on 100 parts by weight of the hydrolyzable copolymer (A), and
(2) the weight ratio of the zinc oxide (C) to the copper and/or the inorganic copper compound (b1) (zinc oxide (C) / (copper and/or inorganic copper compound (b1))) is in the range of 0.8 to 1.0.

The copper and/or the inorganic copper compound (b1) is preferably cupric oxide.

The antifouling coating composition preferably further comprises an organic antifouling agent (b2).

The organic antifouling agent (b2) is preferably at least one compound selected from the group consisting of a pyrithione compound, a tri-organic boron and its amine complex, and 4,5-dichloro-2-n-octyl-4-isothiazoline-3-one, and
is more preferably at least one compound selected from the group consisting of copper pyrithione, zinc pyrithione, triphenylboron pyridine complex, methyldiphenylboron 4-isopropylpyridine complex and 4,5-dichloro-2-octyl-4-isothiazoline-3-one.

The content of the organic antifouling agent (b2) is preferably in the range of 10 to 500 parts by weight based on 100 parts by weight of the hydrolyzable copolymer (A).

The antifouling coating composition preferably further comprises at least one extender pigment selected from the groupconsisting of talc, clay, calcium carbonate, bariumcarbonate, diatomaceous earth and silica.

The content of the extender pigment is preferably in the range of 10 to 100 parts by weight based on 100 parts by weight of the hydrolyzable copolymer (A).

The antifouling coating composition preferably further comprises a plasticizer.

The content of the plasticizer is preferably in the range of 0.05 to 40 parts by weight based on 100 parts by weight of the hydrolyzable copolymer (A).

The plasticizer is preferably chlorinated paraffin and/or terpene phenol.

The antifouling coating composition preferably further comprises at least one color pigment selected from the group consisting of red iron oxide, titanium white, yellow iron oxide and an organic pigment.

The metal salt bond-containing copolymer (a1) preferably has a component unit (IV) derived from a monobasic acid metal (meth)acrylate represented by the formula (IV):

CH₂=C(R²)-COO-M-O-COR¹ (IV)

wherein R¹ is an organic group, R² is a hydrogen atom or a methyl group, and M is zinc or copper, with the proviso that the case wherein R¹ is -CH=CH₂ or -C(CH₃)=CH₂ is excluded.

The metal salt bond-containing copolymer (a1) preferably has
a component unit (IV) derived from a monobasic acid metal (meth)acrylate represented by the above formula (IV), and
a component unit (a12) derived from at least one unsaturated compound selected from the group consisting of an alkyl (meth)acrylate, an alkoxyalkyl (meth) acrylate and hydroxyalkyl (meth)acrylate.

Examples of the organic group R¹ in the metal salt bond-containing copolymer (a1) include a saturated or unsaturated aliphatic monovalent hydrocarbon group having 2 to 30 carbon atoms, which may be substituted, a saturated or unsaturated alicyclic monovalent hydrocarbon group having 3 to 30 carbon atoms, which may be substituted, and an aromatic monovalent hydrocarbon group having 6 to 30 carbon atoms, which may be substituted.

Preferable is a saturated or unsaturated aliphatic or saturated or unsaturated alicyclic monovalent hydrocarbon group having 9 to 20 carbon atoms, which may be substituted; and
more preferable is a residue of at least one monobasic acid (R¹COOH) selected from the group consisting of versatic acid, palmitic acid, stearic acid, isostearic acid,oleic acid,linoleic acid, linolenic acid, abietic acid, neoabietic acid, pimaric acid, dehydroabietic acid, 12-hydroxystearic acid and naphthenic acid.

The total content of zinc and copper in the metal salt bond-containing copolymer (a1) is preferably in the range of 0.5 to 20% by weight.

The monomer (a2) capable of deriving the component unit (a21) in the metal salt bond-containing copolymer (a2) is preferably at least one compound selected from the group consisting of zinc (meth)acrylate and copper (meth)acrylate.

Examples of the other unsaturated monomer (a22) capable of deriving the component unit (a22) in the metal salt bond-containing copolymer (a2) include:
a monobasic acid metal (meth)acrylate (IV) represented by the formula (IV):

   CH₂=C(R²)-COO-M-O-COR¹ (IV)

   wherein R¹ is an organic group, R² is a hydrogen atom or a methyl group, and M is zinc or copper, with the proviso that the case wherein R¹ is -CH=CH₂ or -C(CH₃)=CH₂ is excluded, and
   at least one unsaturated compound selected from the group consisting of an alkyl (meth)acrylate, an alkoxyalkyl (meth)acrylate and a hydroxyalkyl (meth)acrylate. This unsaturated compound is preferably at least one unsaturated compound selected from the group consisting of methyl (meth)acrylate, ethyl (meth)acrylate, butyl (meth)acrylate and 2-hydroxyethyl (meth)acrylate.

Examples of the metal salt bond-containing copolymer (a2) include:
a copolymer having,
as the component unit (a21), a component unit derived from at least one compound selected from the group consisting of zinc (meth)acrylate and copper (meth)acrylate, and
as the component unit (a22), a component unit derived from at least one unsaturated compound selected from the group consisting of methyl (meth)acrylate, ethyl (meth)acrylate, butyl (meth)acrylate and 2-hydroxyethyl (meth)acrylate;
a copolymer having,
as the component unit (a21), a component unit derived from at least one compound selected from the group consisting of zinc (meth)acrylate and copper (meth)acrylate, and
as the component unit (a22), a component unit derived from a monobasic acid metal (meth)acrylate (IV) represented by the formula (IV):

   CH₂=C(R²)-COO-M-O-COR¹ (IV)

   wherein R¹ is an organic group, R² is a hydrogen atom or a methyl group, and M is zinc or copper, with the proviso that the case wherein R¹ is -CH=CH₂ or -C(CH₃)=CH₂ is excluded;
a copolymer having,
as the component unit (a21), a component unit derived from at least one compound selected from the group consisting of zinc (meth)acrylate and copper (meth)acrylate,
as the component units (a22), a component unit derived from a monobasic acid metal (meth)acrylate (IV) represented by the formula (IV):

   CH₂=C(R²)-COO-M-O-COR¹ (IV)

   wherein R¹ is an organic group, R² is a hydrogen atom or a methyl group, and M is zinc or copper, with the proviso that the case wherein R¹ is -CH=CH₂ or -C(CH₃)=CH₂ is excluded, and
a component unit derived from at least one unsaturated compound selected from the group consisting of an alkyl (meth)acrylate, an alkoxyalkyl (meth) acrylate and a hydroxyalkyl (meth)acrylate; and
a copolymer having,
as the component unit (a21), a component unit derived from at least one compound selected from the group consisting of zinc (meth)acrylate and copper (meth)acrylate, and
as the component units (a22), a component unit derived from a monobasic acid metal (meth)acrylate (IV) represented by the formula (IV):

   CH₂=C(R²)-COO-M-O-COR¹ (IV)

   wherein R¹ is an organic group, R² is a hydrogen atom or a methyl group, and M is zinc or copper, with the proviso that the case wherein R¹ is -CH=CH₂ or -C(CH₃)=CH₂ is excluded, and
a component unit derived from at least one unsaturated compound selected from the group consisting of methyl (meth)acrylate, ethyl (meth)acrylate, butyl (meth)acrylate and 2-hydroxyethyl (meth)acrylate.

As the organic group R¹ in the monobasic acid metal (meth)acrylate (IV),
a saturated or unsaturated aliphatic or saturated or unsaturated alicyclic monovalent hydrocarbon group having 9 to 20 carbon atoms, which may be substituted, is preferable, and
a residue of at least one monobasic acid (R¹COOH) selected from the group consisting of versatic acid, palmitic acid, stearic acid, isostearic acid, oleic acid, linoleic acid, linolenic acid, abietic acid, neoabietic acid, pimaric acid, dehydroabietic acid, 12-hydroxystearic acid and naphthenic acid is more preferable.

The total content of zinc and copper in the metal salt bond-containing copolymer (a2) is preferably in the range of 0.5 to 20% by weight.

The monomer (a31) capable of deriving the component unit (a31) in the silyl ester compound (a3) is preferably a trialkylsilyl (meth)acrylate.

The trialkylsilyl (meth) acrylate is preferably triisopropylsilyl (meth)acrylate.

The other unsaturated monomer (a32) capable of deriving the component unit (a32) in the silyl ester compound (a3) is preferably at least one unsaturated compound selected from the group consisting of an alkyl (meth)acrylate, an alkoxyalkyl (meth)acrylate and a hydroxyalkyl (meth)acrylate, and
is more preferably at least one unsaturated compound selected from the group consisting of methyl (meth)acrylate, ethyl (meth)acrylate, butyl (meth)acrylate and 2-hydroxyethyl (meth)acrylate.

The antifouling coating film of the present invention is characteri zed by being formed from the above-mentioned antifouling coating composition.

The substrate with a coating film of the present invention is characterized in that a surface of a substrate is coated with a coating film obtained by curing the above-mentioned antifouling coating composition.

The substrate with an antifouling coating film of the present invention is characterized in that a surface of a substrate to be brought into contact with the seawater or fresh water is coated with a coating film obtained by curing the above-mentioned antifouling coating composition.

This substrate is preferably an underwater structure, a ship's outside plating, a fishing net or a fishing gear.

The method for forming a coating film on a surface of a substrate of the present invention is characterized by coating or impregnating a surface of a substrate with the above-mentioned antifouling coating composition and then curing the composition to form a coating film.

The method for preventing a substrate from fouling of the present invention is characterized by coating or impregnating a surface of a substrate with the above-mentioned antifouling coating composition and then curing the composition to form an antifouling coating film.

This substrate is preferably an underwater structure, a ship's outside plating, a fishing net or a fishing gear.

### EFFECT OF THE INVENTION

The present invention provides a coating material, particularly an antifouling coating composition which is a hydrolyzable antifouling coating composition, and forms an antifouling coating film which is excellent particularly in antibacterial action and renewal of coating film with a good balance between them and can effectively prevent adhesion of marine organisms, particularly algae, for a long period of time when it is applied to a surface of a substrate of a ship's hull or the like and then cured.

Further, the present invention provides an antifouling coating film which is obtained by applying and curing the above-mentioned antifouling coating composition, is excellent in antibacterial action (static antifouling properties) and renewal of coating film with a good balance between them and can effectively prevent adhesion of marine organisms for a long period of time, a substrate with a coating film and an antifouling substrate.

Moreover, the present invention provides a method for forming a coating film having the above properties on a surface of a substrate safely and efficiently and a method for preventing a substrate from fouling.

### BEST MODE FOR CARRYING OUT THE INVENTION

The antifouling coating composition, the antifouling coating film, the substrate with a coating film, the antifouling substrate, the method for forming a coating film on a surface of a substrate, and the method for preventing a substrate from fouling according to the invention are described in detail hereinafter.

In the case where the quantity (weight) of a copolymer or the quantity ratio between a copolymer and other component is described in this specification, the amount of copolymer indicates that of a solid component which does not include a solvent or the like, unless otherwise noted.

However, in such a case where a solids content (%) is specified as a "heating residue (% by weight)" or a volatile content is specified as in Tables 5 to 10 or in the examples and the comparative examples, the copolymer (polymer) quantity indicates a quantity containing not only a quantity of a solid component that is a coating film-forming component but also a quantity of a volatile component (solvent, dispersion medium).

### Antifouling coating composition

The antifouling coating composition according to the invention comprises a specific hydrolyzable copolymer (A), copper and/or an inorganic copper compound (b1), and zinc oxide (C).

### (A) Hydrolyzable copolymer

Examples of the hydrolyzable copolymer (A) include the following metal salt bond-containing copolymers (a1) and (a2) and the following silyl ester copolymer (a3):
(a1) a metal salt bond-containing copolymer which is an acrylic resin or a polyester resin and has, at the end of a side chain, a group represented by the formula (I):

   -COO-M-O-COR¹ (I)

   wherein M is zinc or copper, and R¹ is an organic group,
(a2) a metal salt bond-containing copolymer having
   a component unit (a21) derived from a monomer (a21) represented by the formula (II):

   CH₂=C(R²)-COO-M-O-CO-C(R₂)=CH₂ (II)

   wherein M is zinc or copper, and each R² is independently a hydrogen atom or a methyl group, and
   a component unit (a22) derived from other unsaturated monomer (a22) copolymerizable with the monomer (a21), and
(a3) a silyl ester copolymer having
   a component unit (a31) derived from a monomer (a31) represented by the formula (III):

   R⁷-CH=C (R³)-COO-SiR⁴R⁵R⁶ (III)

   wherein R³ is a hydrogen atom or a methyl group,
   R⁴, R⁵ and R⁶ are each independently a hydrocarbon group, and
   R⁷ is a hydrogen atom or R⁸-O-CO- (wherein R⁸ is an organic group or a silyl group represented by -SiR⁹R¹⁰R¹¹, and R⁹, R¹⁰ and R¹¹ are each independently a hydrocarbon group), and
   a component unit (a32) derived from other unsaturated monomer (a32) copolymerizable with the monomer (a31).

These hydrolyzable copolymers (A) may be used singly or in combination of two or more kinds. In the present invention, they may be used according to the use purpose of the antifouling coating composition, the sea area where the ship is used, etc., and specifically, as the hydrolyzable copolymer (A), any one of the metal salt bond-containing copolymers (a1) and (a2) and the silyl ester copolymer (a3) may be used singly, e.g., the silyl ester copolymer (a3) may be used singly from the viewpoint of prevention of adhesion of algae, or two or more of them, e.g., the metal salt bond-containing copolymer (a1) (or (a2)) and the silyl ester compound (a3), may be used in proper combination in an arbitrary quantity ratio from the viewpoint of long-term stability.

The metal salt bond-containing copolymers (a1) and (a2) and the silyl ester copolymer (a3) are described in detail hereinafter.

As the metal salt bond-containing copolymers (a1) and (a2) and the silyl ester copolymer (a3), hitherto publicly known ones are employable. Examples of them include:
(i) a hydrolyzable self-polishing resin having, in the side chain, a group represented by the formula "-X-O-Cu-Y" (wherein X is >C=O, and Y is an organic acid residue and may be an alkylsilyloxy group or the like), which is described in [0010] to [0017] of JP 1998-298454 A (Patent document);
(ii) a hydrolyzable acrylic resin or polyester resin having, in the side chain, a group represented by the formula "-COO-M-Yy" (wherein y is (a valence of M) - 1, M is any one metal of Cu, Zn and Si (when y is 2 or greater, Y may be the same as or different from each other), and Y is an alkyl group, a hydroxyl group or a group represented by -OCOR¹ (wherein R¹ is a hydrocarbon group of 10 or more carbon atoms)) or a group represented by -R²-CO-CH₂-CO-R³ (wherein R² is an alkylene group or a divalent group composed of a phenyl derivative, and R³ is an alkyl group or a monovalent group composed of a phenyl derivative), which is described in [0010] to [0017] of JP 2000-5692 A (patent document);
(iii) a hydrolyzable copolymer (particularly metal-containing copolymer) described in [0039] to [0068] of JP 2004-196957 A (patent document) and a polymerizable unsaturated carboxylic acid silyl ester copolymer described in [0069] to [0092] of the same publication, which have been previously proposed by the present applicant; and
(iv) a hydrolyzable copolymer (particularly metal-containing copolymer) described in [0051] to [0091] of JP 2005-97400 A (patent document) and a polymerizable unsaturated carboxylic acid silyl ester copolymer described in [0092] to [0124] of the same publication, which have been previously proposed by the present applicant.

The metal salt bond-containing copolymers (a1) and (a2) and the silyl ester copolymer (a3) which are particularly preferable for attaining the objects of the present invention are described below in detail.

### Metal salt bond-containing copolymer (a1)

The metal salt bond-containing copolymer (a1) is an acrylic resin or a polyester resin that is a base (substrate) resin, and is a copolymer having, at the end of a side chain, a group represented by the formula (I):

-COO-M-O-COR¹ (I)

wherein M is zinc or copper, and R¹ is an organic group,
with the proviso that the case where R¹ is a vinyl group (-CH=CH₂) and an isopropenyl group (-C(CH₃)=CH₂), namely, the case of a monomer (a21) represented by the formula (II), is excluded.

### Organic group R¹

Examples of the organic groups R¹ include hydrocarbon groups, such as a monovalent saturated aliphatic group having 2 to 30 carbon atoms, preferably 9 to 20 carbon atoms, a monovalent unsaturated aliphatic group having 2 to 30 carbon atoms, preferably 9 to 20 carbon atoms, a saturated or unsaturated monovalent alicyclic group having 3 to 20 carbon atoms, preferably 9 to 20 carbon atoms, and a monovalent aromatic group having 6 to 30 carbon atoms; and organic acid residues of monobasic acids composed of substituted groups thereof.

Of these organic groups R¹, preferred R¹ is a monovalent saturated or unsaturated aliphatic hydrocarbon group having 9 to 20 carbon atoms, a saturated or unsaturated alicyclic hydrocarbon group having 9 to 20 carbon atoms, or an organic acid residue of amonobasic acid composed of a substituted group thereof, from the viewpoints of resin viscosity, elution of a resin from a coating film and storage stability of a coating material.

The organic group R¹ is preferably an organic acid residue (R¹) formed from a monobasic acid (R¹COOH), such as versatic acid (mixture of carboxylic acids having 9 to 11 (mainly 10) carbon atoms, which is represented by R^{a}R^{b}R^{c}C-COOH (R^{a}, R^{b} and R^{c} are each independently an alkyl group)), palmitic acid, stearic acid, isostearic acid, oleic acid, linoleic acid, linolenic acid, abietic acid, neoabietic acid, pimaric acid, dehydroabietic acid, 12-hydroxystearic acid or naphthenic acid, from the viewpoints that synthesis of the metal salt bond-containing copolymer (a1) is easy, the metal salt bond-containing copolymer (a1) can be slowly hydrolyzed from a coating film formed from the resulting antifouling coating composition to exhibit antifouling performance, the metal salt bond-containing copolymer (a1) is a small burden to the environment when hydrolyzed, the antifouling effect lasts long, surface renewal property is excellent, recoatability in painting for maintenance or the like is excellent, etc.

As the metal salt bond-containing copolymer (a1), a copolymer having one or more kinds of component units derived from compounds represented by the following formula (IV) (also referred to as "monobasic acid metal (meth)acrylate (IV)" or "monomer (IV)" in the present specification) is preferable from the viewpoints of elution of a resin and long-lasting property.

CH₂=C(R²) -COO-M-O-COR¹ (IV)

In the formula (IV), R¹ and M are the same as those previously described, and R² is a hydrogen atom or a methyl group.

That is to say, in the formula (IV), M is zinc or copper, R² is a hydrogen atom or a methyl group, R¹ is the same organic group as R¹ in the aforesaid formula (I), and preferred embodiments of the organic groups and the reasons are the same as those previously described.

Examples of the monobasic acid metal (meth)acrylates (IV) which are metal-containing monomers represented by the formula (IV) include zinc versatate (meth)acrylate (CH₂=C(R²)-COO-Zn-O-CO-(versatic acid residue)), zinc isostearate (meth)acrylate (CH₂=C(R²)-COO-Zn-O-CO-(isostearic acid residue)), copper versatate (meth)acrylate (CH₂=C(R²)-COO-Cu-O-CO-(versatic acid residue)) and copper isostearate (meth)acrylate (CH₂=C(R²)-COO-Cu-O-CO-(isostearic acid residue)). These monobasic acid metal (meth)acrylates (IV) are used singly or in combination of two or more kinds.

In the preparation of the metal salt bond-containing copolymer (a1) having a component unit derived from the monomer (IV) (also referred to as a "component unit (IV)" hereinafter), the monobasic acid metal (meth)acrylate (IV) does not necessarily have to be used as a monomer, and the process for preparing the copolymer (a1) is not specifically restricted as long as the component unit (IV) is present in the resulting copolymer.

It is desirable that the metal salt bond-containing copolymer (a1) contains a component unit (a12) derived from "other unsaturated monomer (a12)" in addition to the component unit (IV). Examples of the "other unsaturated monomers (a12) " include unsaturated compounds, such as alkyl (meth)acrylate, alkoxyalkyl (meth)acrylate and hydroxyalkyl (meth)acrylate, and preferable are alkyl (meth) acrylate wherein the number of carbon atoms of the alkyl group is 1 to 20, alkoxyalkyl (meth)acrylate wherein the number of carbon atoms of the alkoxy group is 1 to 20 and the number of carbon atoms of the alkylene group is 1 to 20, and hydroxyalkyl (meth) acrylate wherein the number of carbon atoms of the hydroxyalkyl group is 1 to 20.

Examples of the alkyl (meth)acrylates of the "other unsaturated monomers (a12)" include methyl (meth) acrylate, ethyl (meth)acrylate and butyl (meth)acrylate;
examples of the alkoxyalkyl (meth)acrylates include methoxymethyl (meth)acrylate, 2-methoxyethyl (meth)acrylate, ethoxymethyl (meth)acrylate, ethoxyethyl (meth)acrylate, butoxymethyl (meth)acrylate, 3-methoxybutyl (meth)acrylate and 3-methyl-3-methoxybutyl (meth)acrylate; and
examples of the hydroxyalkyl (meth)acrylates include 2-hydroxyethyl (meth)acrylate.

Of these "other unsaturated monomers (a12)", methyl (meth)acrylate, ethyl (meth)acrylate, butyl (meth) acrylate and 2-hydroxyethyl (meth) acrylate are preferable from the viewpoints of coating film properties and long-lasting resin elution from a coating film.

These "other unsaturated monomers (a12)" are used singly or in combination of two or more kinds.

It is desirable that in the metal salt bond-containing copolymer (a1), the monobasic acid metal (meth)acrylate component units (IV) are contained in amounts of usually 10 to 100% by mol, preferably 10 to 90% by mol, with the proviso that the total amount of all the component units in the copolymer (a1) is 100% by mol, and the component units (a12) derived from the "other monomer (a12)" are contained in the residual amounts, that is, in amounts of usually 0 to 90% by mol, preferably 10 to 90% by mol, from the viewpoints of resin viscosity, elution of a resin from a coating film, water resistance of a coating film, etc.

It is desirable that the number-average molecular weight Mn (in terms of polystyrene, the same shall apply hereinafter, measured by GPC, measuring conditions: columns of Super H2000+H4000) of the metal salt bond-containing copolymer (a1) is in the range of usually 1, 000 to 100,000, preferably 1, 000 to 50,000, from the viewpoints of resin viscosity, storage layer stability of a coating material, elution rate of a resin from a coating film, etc.

It is desirable that the total content of zinc (Zn) and copper (Cu) in the metal salt bond-containing copolymer (a1) is in the range of usually 0.5 to 20% by weight, preferably 5 to 20% by weight (with the proviso that the amount of the metal salt bond-containing copolymer (a1) is 100% by weight), from the viewpoint that resin viscosity, storage stability of a coating material and elution of a resin from a coating film become excellent

### Preparation of metal salt bond-containing copolymer (a1) and the like

Any of the above metal salt bond-containing copolymer (a1), the following metal salt bond-containing copolymer (a2) and the following silyl ester copolymer (a3) can be prepared by a hitherto publicly known process, such as a process described in (i) the aforesaid JP 1998-298454 A and (ii) the aforesaid JP 2000-5692 A, or a process described in (iii) JP 2004-196957 A (patent document) and (vi) JP 2005-97400 A (patent document) which have been proposed by the present applicant.

### Metal salt bond-containing copolymer (a2)

The metal salt bond-containing copolymer (a2) is a metal salt bond-containing copolymer having
a component unit (a21) derived from a monomer (a21) represented by the formula (II):

CH₂=C (R²)-COO-M-O-CO-C(R²)=CH₂ (II)

wherein M is zinc or copper, and each R² is independently a hydrogen atom or a methyl group, and
a component unit (a22) derived from "other unsaturated monomer (a22)" copolymerizable with the monomer (a21).

In the present invention, the monomer (a21) does not necessarily have to be used in the preparation of the metal salt bond-containing copolymer (a2), and the process for preparing the copolymer (a2) is not specifically restricted as long as the same component unit as a component unit (component unit (a21)) derived from the monomer (a21) is present in the resulting copolymer, similarly to the case of the metal salt bond-containing copolymer (a1).

Examples of the monomers (a21) include zinc (meth) acrylates (zinc di (meth)acrylates), such as (CH₂=CHCOO)₂Zn, (CH₂=C(CH₃)COO)₂Zn and (CH₂=CHCOO)(CH₂=C(CH₃) COO) Zn, and copper (meth)acrylates (copper di(meth)acrylates), such as (CH₂=CHCOO)₂Cu, (CH₂=C(CH₃)COO)₂Cu and (CH₂=CHCOO)(CH₂=C(CH₃) COO) Cu. Of these, zinc (meth) acrylates are preferable from the viewpoints of the resulting resin viscosity, storage stability of a coating material, elution of a resin from a coating film, etc. In the present invention, these monomers (a21) may be used singly or in combination of two or more kinds.

It is desirable that the metal salt bond-containing copolymer (a2) contains a component unit (a22) derived from "other unsaturated monomer (a22)" copolymerizable with the monomer (a21) in addition to the component unit (a21) derived from the monomer (a21), from the viewpoint of control of elution rate of a resin.

Examples of the "other unsaturated monomer (a22)" include the aforesaid monobasic acid metal (meth) acrylate (IV) which is sometimes used in the preparation of the metal salt bond-containing copolymer (a1) and/or the "other unsaturated monomer (a12)" which is a monomer used in the preparation of the metal salt bond-containing copolymer (a1) when necessary.

That is to say, in the metal salt bond-containing copolymer (a2), the monobasic acid metal (meth) acrylate component unit (IV) may be present, or the component unit (a12) derived from the other unsaturated monomer (a12) may be present, or both of the component unit (IV) and the component unit (a12) may be present, in addition to the essential component unit (a21) derived from the monomer (a21). As the other unsaturated monomer (a12), preferable is such an alkyl (meth)acrylate, an alkoxyalkyl (meth)acrylate and a hydroxyalkyl (meth)acrylate as previously described, and more preferable is methyl (meth)acrylate, ethyl (meth)acrylate, butyl (meth)acrylate and 2-hydroxyethyl (meth)acrylate for the same reason as previously described.

It is desirable that in the metal salt bond-containing copolymer (a2), the component units (a21) derived from the monomer (a21) are contained in amounts of usually 10 to 100% by mol, preferably 10 to 90% by mol, with the proviso that the total amount of all the component units in the copolymer (a2) is 100% by mol, and the component units (a22) derived from the "other monomer (a22)" are contained in the residual amounts, that is, in amounts of usually 0 to 90% by mol, preferably 10 to 90% by mol, from the viewpoint that the control of elution rate of a resin from a coating film is easy. In 100% by mol of the component units (a22) derived from "other unsaturated monomers (a22)", the monobasic acid metal (meth)acrylate component units (IV) may be present in amounts of 0 to 100% by mol, preferably 0 to 90% by mol, and the component units (a12) derived from the other unsaturated monomers (a12) may be present in the residual amounts, that is, in amounts of 100 to 0% by mol, preferably 10 to 90% by mol.

It is desirable that the number-average molecular weight Mn (in terms of polystyrene, the same shall apply hereinafter, measured by GPC, measuring conditions: columns of Super H2000+H4000) of the metal salt bond-containing copolymer (a2) is in the range of usually 1,000 to 100,000, preferably 1,000 to 10,000, from the viewpoints of resin viscosity and elution rate of a resin from a coating film.

It is desirable that the total content of zinc (Zn) and copper (Cu) in the metal salt bond-containing copolymer (a2) is in the range of usually 0.5 to 20% by weight, preferably 5 to 20% by weight (with the proviso that the amount of the metal salt bond-containing copolymer (a2) is 100% by weight), from the viewpoint that resin viscosity, storage stability of a coating material and elution of a resin from a coating film become excellent.

### Silyl ester copolymer (a3)

As previously described, the silyl ester copolymer (a3) is a copolymer having
a component unit (a31) (also referred to as a "silyl ester component unit" hereinafter) derived from a monomer (also referred to as a "silyl ester monomer" hereinafter) (a31) represented by the following formula (III), and
a component unit (a32) derived from other unsaturated monomer (a32) copolymerizable with the monomer (a31).

Formula (III):

R⁷-CH=C(R³)-COO-SiR⁴R⁵R⁶ (III)

In the formula (III), R³ is a hydrogen atom or a methyl group,
R⁴, R⁵ and R⁶ are each independently a hydrocarbon group, and
R⁷ is a hydrogen atom or R⁸-O-CO- (wherein R⁸ is an organic group or a silyl group represented by -SiR⁹R¹⁰R¹¹, and R⁹, R¹⁰ and R¹¹ are each independently a hydrocarbon group).

With regard to the silyl ester monomers (a31), when R⁷ is a hydrogen atom (H), the monomer (a31) is represented by the formula (IIIa):

CH₂=C(R³)-COO-SiR⁴R⁵R⁶ (IIIa)

wherein R³, R⁴, R⁵ and R⁶ are the same as those in the formula (III).

R⁴, R⁵ and R⁶ are each desirably an alkyl group having 1 to 10 carbon atoms, preferably 1 to 5 carbon atoms, and more specifically, they are each desirably an alkyl group, such as a methyl group, an ethyl group, a propyl group and an i-propyl group.

Examples of the silyl ester monomers (a31) represented by the formula (IIIa) include trialkylsilyl (meth)acrylates, such as trimethylsilyl (meth)acrylate, triethylsilyl (meth)acrylate and triisopropylsilyl (meth)acrylate. Of these, triisopropylsilyl (meth)acrylate is preferable from the viewpoint that elution of a resin from a coating film, long-lasting elution property and coating film properties (e.g., crack resistance) are excellent.

With regard to the silyl ester monomers (a31), when R⁷ is "R⁸-O-CO-" (wherein R⁸ is the same as that in the formula (III)), the monomer (a31) is represented by the formula (IIIb):

R⁸-O-CO-CH=C(R³) -COO-SiR⁴R⁵R⁶ (IIIb)

wherein R³, R⁴, R⁵, R⁶ and R⁸ are the same as those in the formula (III).

The silyl ester monomer (a31) represented by the formula (IIIb) is specifically, for example, maleic ester (compound represented by the formula (IIIb) wherein R³ is H).

Examples of the "other unsaturated monomer (a32)" copolymerizable with the monomer (a31) include the aforesaid "other unsaturated monomer (a12)" which can be used for preparing the copolymer (a1).

As the "other unsaturated monomer (a32)", preferable is such an alkyl (meth)acrylate, an alkoxyalkyl (meth)acrylate or a hydroxyalkyl (meth)acrylate as previously described, and more preferable is methyl (meth)acrylate, ethyl (meth)acrylate, butyl (meth)acrylate or 2-hydroxyethyl (meth)acrylate for the same reason as previously described.

It is desirable that in the silyl ester copolymer (a3) (the total amount of all the component units in this copolymer (a3) being 100% by mol), the component units (a31) derived from the silyl ester monomer (a31) is contained in an amount of usually 10 to 100% by mol, preferably 10 to 90% by mol, and the component units (a32) derived from the "other monomer (a32)" are contained in the residual amounts, that is, in amounts of usually 0 to 90% by mol, preferably 10 to 90% by mol, from the viewpoint that resin viscosity of a coating film (i.e., crack resistance), storage stability of a coating material, elution of a resin from a coating film, etc. are excellent.

It is desirable that the number-average molecular weight Mn (in terms of polystyrene, the same shall apply hereinafter, measured by GPC, measuring conditions: columns of Super H2000+H4000) of the silyl ester copolymer (a3) is in the range of usually 1, 000 to 200,000, preferably 1,000 to 100,000, from the viewpoints of the aforesaid resin viscosity, storage stability and elution of a resin from a coating film.

### (b1) Copper and/or inorganic copper compound

In the antifouling coating composition of the invention, copper and/or an inorganic copper compound (b1) that is an antifouling agent (B) is contained as an essential component. It is desirable that the copper and/or the inorganic copper compound (b1) is contained in an amount of usually 100 to 400 parts by weight, preferably 100 to 350 parts by weight, more preferably 100 to 300 parts by weight, based on 100 parts by weight of the hydrolyzable copolymer (A) (solids content) that is the total amount of the polymers (a1) to (a3), from the viewpoint that the resulting coating film has excellent antifouling properties and is excellent in film properties, particularly in crack resistance. If the content of the copper and/or the inorganic copper compound (b1) is less than the lower limit of the above range, the coating film tends to exhibit insufficient antifouling effect, or renewal of the coating film surface tends to be inhibited. If the content thereof is more than the upper limit of the above range, troubles in properties, such as occurrence of cracks, tend to be brought about.

The mean particle diameter and the particle size distribution of the copper and/or the inorganic copper compound (b1) are not specifically restricted, but for example, when the copper and/or the inorganic copper compound (b1) has a mean particle diameter of 6 to 50 µm, an antifouling coating film which is excellent in continuity of hydrolysis, maintains stationary film consumption degree (constant film consumption degree) over a long period of time and has excellent long-term antifouling properties tends to be obtained.

The inorganic copper compound may be any of copper compounds of inorganic type, and examples thereof include cupric oxide, copper thiocyanide (cuprous thiocyanate, copper rhodanide), basic copper sulfate, basic copper acetate, basic copper carbonate and cupric hydroxide. These copper compounds can be used singly or in combination of two or more kinds, instead of copper or together with copper.

As the copper and/or the inorganic copper compound (b1), cupric oxide is desirable from the viewpoint that the resulting coating film has excellent antifouling properties and is excellent in film properties, particularly in crack resistance.

The antifouling coating composition of the invention preferably further contains an organic antifouling agent (b2) as the antifouling agent (B), from the viewpoint that the resulting coating film exhibits antifouling power in the highly fouling sea area where fouling is particularly serious and is excellent in long-lasting antifouling effect and surface renewal property.

In the present invention, the organic antifouling agent (b2) is particularly preferably at least one organic antifouling agent selected from the group consisting of a metal-pyrithione represented by the following formula [V] and its derivative (pyrithione compound) (in the formula [V], R¹ to R⁴ are each independently a hydrogen atom, an alkyl group, an alkoxy group or a halogenated alkyl group, M is a metal, such as Cu, Na, Mg, Zn, Ca, Ba, Pb, Fe and Al, M is preferably Cu or Zn taking long-lasting film consumption into account, and n is a valence),

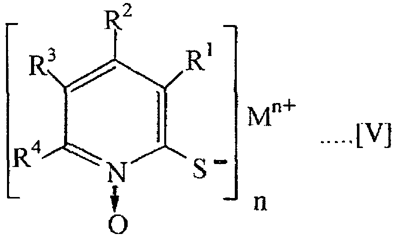

a tri-organic boron and its amine complex, and 4,5-dichloro-2-n-octyl-4-isothiazoline-3-one, from the viewpoint that antifouling properties of a coating film and storage stability of a coating material are excellent.

In the present invention, the organic antifouling agent (b2) is preferably at least one compound selected from the group consisting of copper pyrithione, zinc pyrithione, triphenylboron pyridine complex, methyldiphenylboron 4-isopropylpyridine complex and 4,5-dichloro-2-octyl-4-isothiazoline-3-one, taking into account the storage stability of a coating material and that the long-lasting film consumption of a coating film and the antifouling properties are excellent with a good balance.

In the present invention, it is desirable that the organic antifouling agent, particularly the above-mentioned antifouling agent, is contained as the antifouling agent (B) in an amount of 10 to 500 parts by weight, preferably 10 to 100 parts by weight, based on 100 parts by weight of the copper and/or the inorganic copper compound (b1), from the viewpoint that the resulting antifouling coating film is excellent in antifouling properties, particularly in long-lasting antifouling properties (i.e., film consumption degree is low), is a small burden to the environment and is excellent in water resistance.

### (C) Zinc oxide

In the antifouling coating composition of the invention, zinc oxide (zinc white) (C) is contained as an essential component. It is desirable that the zinc oxide (C) is contained in an amount of usually 50 to 350 parts by weight, preferably 60 to 350 parts by weight, more preferably 75 to 350 parts by weight, still more preferably 100 to 350 parts by weight, particularly preferably 100 to 300 parts by weight, based on 100 parts by weight of the hydrolyzable copolymer (A) (solid content) that is the total amount of the polymers (a1) to (a3), from the viewpoint that the resulting coating film has excellent antifouling properties and is excellent in film properties, particularly in crack resistance.

Between the content of the zinc oxide (C) and the content of the copper and/or the inorganic copper compound (b1), a relationship that (content of zinc oxide (C))/(copper and/or inorganic copper compound (b1)) is in the range of 0.8 to 1.2, preferably 0.8 to 1.0, more preferably 0.8 to 1.0, is formed.

If the amount of the zinc oxide (C) based on the copper and/or the inorganic copper compound (b1) is less than the lower limit of the above range, the antifouling properties of an antifouling coating film formed from the antifouling coating composition of the invention tend to be exhibited insufficiently. The reason is presumably that when the hydrolyzable copolymer (A) is the metal salt-containing copolymer (a1) and/or the metal salt-containing copolymer (a2), the film consumption property of the antifouling coating film is gradually lowered because of the reaction of the copper and/or the inorganic copper compound (b1) with the metal salt-containing copolymer (A), and the antibacterial action of the zinc oxide itself eluted simultaneously with film consumption is not exerted sufficiently. On the other hand, if the amount of the zinc oxide (C) based on the copper and/or the inorganic copper compound (b1) is more than the upper limit of the above range, troubles in properties of the coating film (e.g., occurrence of cracks) tend to be brought about.

### Color pigment

As the color pigments, various pigments of organic type or inorganic type hitherto publicly known are employable.

Examples of the organic pigments include carbon black, naphthol red and phthalocyanine blue.

Examples of the inorganic pigments include red iron oxide, barite powder, titanium white and yellow iron oxide. Various colorants such as dyes may be contained.

In the present invention, as the color pigment, specifically as the inorganic color pigment, any one of red iron oxide, titanium white and yellow iron oxide is particularly preferable from the viewpoint of coloring power. The above organic pigment is also preferable from the viewpoints that a coating film of particularly bright color can be provided, the coating film rarely suffers discoloration, etc.

### Extender pigment

The extender pigment is such a pigment of a low refractive index as is transparent and does not hide the coated surface when mixed with an oil or a varnish. Examples of the extender pigment include talc, silica, mica, clay, diatomaceous earth, calcium carbonate that is used also as an anti-settling agent, kaolin, alumina white, white carbon that is used also as a flatting agent, aluminum hydroxide, magnesium carbonate, barium carbonate and barium sulfate. Of these, an extender pigment selected from the group consisting of talc, clay, calcium carbonate, barium carbonate, diatomaceous earth and silica is particularly preferable.

These extender pigments can be used singly or in combination of two or more kinds. The coating film consumption degree can be controlled depending upon the type of the extender pigment.

In the case where talc is used as the extender pigment in the antifouling coating composition of the invention, the talc is desirably contained in an amount of 10 to 100 parts by weight, preferably 10 to 70 parts by weight, based on 100 parts by weight of the hydrolyzable copolymer (A), taking into account cost reduction of the resulting coating material, extending effect, transparency of the resulting coating film and increase of film thickness. When the talc is contained as above, the talc is desirably contained in an amount of 1 to 10% by weight, preferably 2 to 9% by weight, in the antifouling coating composition from the viewpoint that the talc has no evil influence on the coating film properties and the antifouling properties.

In the present invention, the antifouling coating composition preferably further contains chlorinated paraffin or terpene phenol as a plasticizer.

### Plasticizer such as chlorinated paraffin

Examples of the plasticizer include TCP (tricresyl phosphate), paraffin chloride, polyvinyl ethyl ether and terpene phenol. These plasticizers can be used singly or in combination of two or more kinds.

These plasticizers contribute to enhancement of crack resistance of a coating film (antifouling coating film) composed of the resulting antifouling coating composition. Of these plasticizers, chlorinated paraffin (paraffin chloride) is preferably used.

The chlorinated paraffin (paraffin chloride) which can be added to the antifouling coating composition of the invention may be straight-chain or branched and may be liquid or solid (powdery) at room temperature. However, chlorinated paraffin whose average number of carbon atoms is usually 8 to 10, preferably 10 to 26, is preferably used, and chlorinated paraffin having a number-average molecular weight of usually 200 to 1200, preferably 300 to 1100, a viscosity of usually not less than 1 (poise/25°C), preferably not less than 1.2 (poise/25°C), and a specific gravity of 1. 05 to 1.80/25°C, preferably 1.10 to 1.70/25°C, is preferably used. When chlorinated paraffin having such a number of carbon atoms is used, a coating film rarely suffering cracking and peeling can be formed by the use of the resulting antifouling coating composition. If the number of carbon atoms of the chlorinated paraffin is less than 8, the effect of inhibiting cracking sometimes becomes insufficient. If the number of carbon atoms thereof exceeds 30, consumption property (renewal property) of the resulting coating film surface is sometimes deteriorated, and the antifouling properties are sometimes deteriorated. The percentage of chlorination of the chlorinated paraffin (chlorine content) is desired to be in the range of usually 35 to 75%, preferably 35 to 65%. When chlorinated paraffin having such percentage of chlorination is used, a coating film rarely suffering cracking and peeling can be formed by the use of the resulting antifouling coating composition. Examples of such chlorinated paraffins include "Toyoparax 150" and "Toyoparax A-70" available from Tosoh Corporation.

When terpene phenol is used as the plasticizer, the coating film is prevented from whitening due to exposure, so that use of terpene phenol is preferable.

In the case where the plasticizer is added in the invention, the plasticizer is desirably contained in an amount of 0.05 to 40 parts by weight based on 100 parts by weight of the hydrolyzable copolymer (A) from the viewpoints of crack resistance, decrease of discoloration, enhancement of water resistance, etc. of the coating film.

In the antifouling coating composition (i.e., composition containing volatile components such as solvent) of the invention, the plasticizer is desirably contained in an amount of 0.1 to 5% by weight (the amount of the antifouling coating composition is 100% by weight).

### Preparation of antifouling coating composition

The antifouling coating composition of the invention as above can be prepared in the following manner.

The antifouling coating composition of the invention can be prepared by properly utilizing a hitherto publicly known process using the hydrolyzable copolymer (A) such as the metal salt bond-containing copolymer, the copper and/or the inorganic copper compound (b1) and the zinc oxide (C) as essential raw materials. The antifouling coating composition of the invention can be prepared by, for example, blending the metal salt bond-containing copolymer or the silyl ester copolymer as the hydrolyzable copolymer (A), the copper and/or the inorganic copper compound (b1), the zinc oxide (C), talc and "other components" described below at once or in an arbitrary order and having them stirred, mixed or the like.

### Other components

In the preparation of the antifouling coating composition of the invention, an antifouling agent, a thixotropic agent, a plasticizer, an inorganic dehydrating agent (stabilizer), an anti-sagging/anti-settling agent (thickening agent), a color pigment, a dye, other coating film-forming components, a solvent (e.g., butyl acetate, ethylcyclohexane, xylene), a germicide, an antifungal agent, an anti-aging agent, an antioxidant, an antistatic agent, a flame retardant, a heat transfer improver, a tackifier, etc. may be added in given proportions at once or in an arbitrary order and then stirred/mixed to dissolve/disperse them in the solvent.

In the stirring/mixing of the above components, a mixing/stirring device hitherto publicly known, such as a Ross mixer, a planetary mixer or a Shinagawa universal mixer, is appropriately used.

### Anti-sagging/anti-settling agent (thixotropic agent)

To the antifouling coating composition of the invention, an organic clay type agent, an organic wax type agent or the like may be added as an anti-sagging/anti-settling agent (thixotropic agent) in an arbitrary amount. Examples of the anti-sagging/anti-settling agents include a salt, such as an amine salt of Al, Ca or Zn derived from organic clay, stearate salt, lecithin salt and an alkyl sulfonate, polyethylene wax, amide wax, hydrogenated castor oil wax, polyamide wax, a mixture of both of them, synthetic finely divided silica, and polyethylene oxide wax. Of these, preferably used are polyamide wax, synthetic finely divided silica, polyethylene oxide wax and an organic clay type agent.

Examples of such anti-sagging/anti-settling agents include those on the market under the trade names of "Disperon 305", "Disperon 4200-20" and "Disperson A630-20X" available from Kusumoto Chemicals, Ltd.

### Other coating film-forming component

In the antifouling coating composition of the invention, a resin other than the aforesaid copolymer (A) may be contained as a coating film-forming component within limits not detrimental to the objects of the present invention. Examples of such "other coating film-forming component" include poorly water-soluble or water-insoluble resin (also referred to as "poorly water-soluble/water-insoluble resin" hereinafter) such as an acrylic resin, an acrylic silicone resin, an unsaturated polyester resin, a fluororesin, a polybutene resin, a silicone rubber, a urethane resin (rubber), an epoxy resin, a polyamide resin, a vinyl chloride-based copolymer resin, a chlorinated rubber (resin), a chlorinated olefin resin, a styrene/butadiene copolymer resin, an ethylene/vinyl acetate copolymer resin, a vinyl chloride resin, an alkyd resin, a coumarone resin and a petroleum resin.

Examples of water-soluble resin include a rosin (e.g., trade name: "Rosin WW"), a monocarboxylic acid and a salt thereof. Examples of the monocarboxylic acid include a fatty acid having about 9 to 19 carbon atoms and naphthenic acid. Examples of the salt of the monocarboxylic acid include a Cu salt, a Zn salt and a Ca salt. Examples of the rosin include gum rosin, wood rosin and tall oil rosin, and any of these rosins is employable in the invention. These water-soluble resin can be used singly or in combination of two or more kinds.

### Solvent

In the antifouling coating composition of the invention, various components as mentioned above are usually dissolved or dispersed in a solvent. The solvents employable herein are, for example, various solvents usually added to antifouling coating materials, such as an aliphatic solvent, an aromatic solvent, a ketone solvent, an ester solvent and an ether solvent. Examples of the aromatic solvent include xylene and toluene. Examples of the ketone solvent include MIBK. Examples of the ether solvent include propylene glycol monomethyl ether and propylene glycol monomethyl ether acetate (PMAC).

### Antifouling coating film, substrate with coating film, etc.

The antifouling coating film according to the invention is characterized by being formed from the antifouling coating composition described above.

The substrate with a coating film according to the invention is characterized in that a surface of a substrate is coated with a coating film obtained by curing the antifouling coating composition described above.

The substrate with an antifouling coating film according to the invention is characterized in that a surface of a substrate to be brought into contact with the seawater or fresh water is coated with a coating film obtained by curing the antifouling coating composition described above.

In the substrate with an antifouling coating film according to the invention, the substrate that is a base is preferably an underwater structure, a ship's outside plating, a fishing net or a fishing gear.

The method for forming a coating film on a surface of a substrate according to the invention is characterized by coating or impregnating a surface of a substrate with the antifouling coating composition described above and then curing the composition to form a coating film.

The method for preventing a substrate from fouling according to the invention is characterized by coating or impregnating a surface of a substrate with the antifouling coating composition described above and then curing the composition to form an antifouling coating film.

The substrate that is a target of the method for preventing a substrate from fouling is preferably an underwater structure, a ship's outside plating, a fishing net or a fishing gear.

In more detail, if such an antifouling coating composition as above is applied to surfaces of various products, for example, underwater structures, such as water-supply and exhaust ports of thermal electric power/atomic power plants, sludge diffusion preventive films of various ocean civil engineering works for bay coast roads, undersea tunnels, harbor equipments or canals/channels, ships, and fishery materials (e.g., ropes, fishing nets, fishing gears, floats, buoys), once or plural times in a conventional way, ships, underwater structures and the like coated with antifouling coating films which have excellent antifouling properties, are capable of releasing antifouling agent components over a long period of time, have proper flexibility and excellent crack resistance even if the films are thick are obtained.

That is to say, the antifouling coating films obtained by applying the antifouling coating composition of the invention to surfaces of various products and curing it have excellent antifouling properties such that adhesion of aquatic organisms, such as sea lettuces, barnacles, green lavers, serpulas, oysters and Bugula neritina, can be continuously inhibited for a long period of time.

Even in the case where the materials of ships and the like are FRP, steel, wood, aluminum alloy, etc., the antifouling coating composition particularly favorably adheres to the surfaces of these materials. In the case of a steel ship or an aluminum ship, the substrate surface is usually coated with a primer, an anticorrosive coating material, and if necessary, a binder coating material, and the coated surface is then coated with the antifouling coating composition of the invention. The antifouling coating composition may be applied to a surface of the existing antifouling coating film.

If the antifouling coating composition is applied to, for example, a surface of a marine structure, adhesion of marine organisms can be inhibited, and the function of the structure can be maintained for a long period of time. If the antifouling coating composition is applied to a fishing net, clogging of meshes of the net can be inhibited, and besides, the environment is less likely to be polluted.

The antifouling coating composition of the invention may be directly applied to a fishing net, or may be applied to a surface of a ship, a marine structure or the like that has been coated in advance with an undercoating material such as an anticorrosive agent and a primer. Moreover, the surface of a ship, particularly a FRP ship, an underwater structure or the like that has been coated in advance with a conventional antifouling coating material or the antifouling coating composition of the invention may be overcoated with the antifouling coating composition of the invention for maintenance. The thickness of the antifouling coating film formed on a ship, an underwater structure or the like in the above manner is not specifically restricted, but for example, it is in the range of about 30 to 150µm per one coating time.

The antifouling coating film of the invention obtained as above or the coating film on the surface of a water-contact area of a ship or an underwater structure is formed from such an antifouling coating composition as described above, and these films rarely have a fear of environmental pollution and exhibit excellent long-term antifouling performance against wide-ranging fouling orgasms on ships/underwater structures.

According to the present invention, an antifouling coating composition capable of forming an antifouling coating film which is a small burden to the environment, has excellent antifouling properties, is uniformly consumed at a given rate over a long period of time resulting in an excellent uniform film consumption property, can maintain excellent antifouling performance for a long period of time resulting in an excellent long-term retention of antifouling performance and is preferable for a ship for overseas service, an antifouling coating film, and a ship, an underwater structure, a fishing gear and a fishing net each of which is coated with the antifouling coating film can be provided.

### EXAMPLES

The present invention is further described with reference to the following examples, but it should be construed that the invention is in no way limited to those examples.

In the following examples and comparative examples, the term "part(s)" means part(s) by weight unless otherwise noted.

### Preparation Example 1

### Preparation of side-chain end metal salt bond-containing copolymer (a1-1)

In a four-necked flask equipped with a condenser, a thermometer, a dropping funnel and a stirrer, 30 parts by weight of PGM (propylene glycol monomethyl ether) and 40 parts by weight of xylene were placed, and with stirring, they were heated to 100°C. Subsequently, from the dropping funnel, a mixture consisting of monomers and a polymerization initiator shown in Table 1 (i.e., mixture of 8 parts by weight of zinc acrylate, 8 parts by weight of zinc methacrylate, 12 parts by weight of zinc isostearate acrylate, 12 parts by weight of zinc isostearate methacrylate, 13 parts by weight of 2-methoxyethyl acrylate, 13 parts by weight of methyl methacrylate, 34 parts by weight of ethyl acrylate and 5 parts by weight of t-butyl peroxide) was dropped at the uniform rate over a period of 3 hours. After the dropping was completed, 1 part by weight of t-butyl peroctoate and 10 parts by weight of xylene were dropped over a period of 2 hours, and after stirring for 2 hours, 20 parts by weight of xylene were added to obtain a copolymer containing a metal salt bond at a side-chain end (a1-1) which has property values shown in Table 1.

Gardner viscosity and solids content (%), which are properties of the resulting copolymer containing a metal salt bond at a side-chain end (also referred to as "side-chain end structure metal salt copolymer" hereinafter) (a1-1) or a reaction mixture containing the copolymer, were evaluated. The results are set forth in Table 1.

### Measuring conditions of Gardner viscosity

Gardner viscosity was measured under the conditions of a resin concentration of 35% by weight and 25°C in accordance with JIS K 7233-4.3, as described in JP 2003-55890 A (patent document).

### Solids content

Solids content means a heating residue given when a reaction mixture, a coating material, an uncured coating film or the like containing a polymer, a solvent, etc. is heated and dried to evaporate the solvent, etc., and in usual, the solid components include a resin component, a pigment, etc. and become film-forming components. For the calculation, monomers (examples: Table 2) contained in a coating material or the like and capable of forming a resin (solid component) through reaction are also included in the solid components.

### Measurements of number-average molecular weight Mn and weight-average molecular weight Mw

Weight-average molecular weight Mw of a resin such as a metal-containing resin was measured by HLC-8120GPC using two separation columns (α-M) of TSK-gel α type and using, as an eluting solution, DMF (dimethylformamide) to which 20 mM of LiBr had been added. The weight-average molecular weight was determined in terms of polystyrene.

Number-average molecular weight Mn of the resin was measured by the above GPC and determined in terms of polystyrene.

### Preparation Example 2

A side-chain end structure metal salt copolymer (a1-2) was prepared in the same manner as in Preparation Example 1, except that the components were changed as shown in Table 1.

Properties of the resulting side-chain end structure metal salt copolymer or a reaction mixture containing the copolymer were evaluated in the same manner as in Preparation Example 1. The results are set forth in Table 1.

**Table 1**

| (Preparation example of copolymer containing a metal salt bond at a side-chain end (a1)) | | | |
|---|---|---|---|
| | | Prep. Ex. 1 | Prep. Ex. 2 |
| Side-chain end structure metal salt copolymer (a1) | | a1-1 | a1-2 |
| Components (unit: part(s) by weight) | | | |
| Metal-containing monomer (a1) | Zinc acrylate | 8 | |
| | Zinc methacrylate | 8 | |
| Metal-containing monomer (a2) | Zinc versatate methacrylate | | 35 |
| | Zinc isostearate acrylate | 12 | |
| | Zinc isostearate methacrylate | 12 | |
| Polymerizable monomer (b) | 2-Methoxyethyl acrylate | 13 | 10 |
| | 3-Methoxybutyl acrylate | | 30 |
| Unsaturated monomer | Methyl methacrylate | 13 | |
| | Ethyl acrylate | 34 | 25 |
| Polymerization initiator | t-Butyl peroxide | 5 | 6 |
| Properties | | | |
| Gardner viscosity | | -Y | +Z |
| Solids content (wt%) | | 49.7 | 50.5 |
| Molecular weight | Mn | 2,350 | 2,120 |
| | Mw | 5,300 | 5,010 |

### Preparation Example 3

### Preparation of metal-containing monomer A

In a four-necked flask equipped with a condenser, a thermometer, a dropping funnel and a stirrer, 85.4 parts of propylene glycol methyl ether (PGM) and 40.7 parts of zinc oxide were placed, and with stirring, they were heated to 75°C. Subsequently, from the dropping funnel, a mixture consisting of 50.0 parts of methyl methacrylate (MMA), 36.1 parts of acrylic acid (AA) and 5 parts of water was dropped at the uniform rate over a period of 3 hours. After the dropping was completed, the reaction solution turned transparent from an opaque white state. After stirring for 2 hours, 36 parts of propylene glycol methyl ether (PGM) were added to obtain a transparent mixture solution A containing a metal-containing monomer A.

The solids content (metal-containing monomer A) in the resulting mixture solution A was 44.8% by weight. Composition, etc. are set forth in Table 2.

### Preparation Example 4

### Preparation of metal-containing monomer B

A mixture solution B containing a metal-containing monomer B was prepared in the same manner as in the process described in Preparation Example 3, except that 7.2 parts of butanol (n-BuOH) and 31.1 parts of xylene were used instead of 36 parts of propylene glycol monomethyl ether (PGM).

The solids content (metal-containing monomer B) in the resulting mixture solution B was 44.9% by weight. Composition, etc. are set forth in Table 2.

**Table 2**

| (Preparation example of metal-containing monomer mixture) | | | | | | | | | |
|---|---|---|---|---|---|---|---|---|---|
| | Used amount (molar ratio) | | | | Content of volatile component in metal-containing monomer mixture (%) | | | | Solids content (wt%) |
| | MMA | AA | ZnO | Water | PGM | n-BuOH | Xylene | Water | |
| Prep. Ex. 3 (A) | 0.5 | 0.5 | 0.5 | 0.27 | 53.2 | | | 2 | 44.8 |
| Prep. Ex. 4 (B) | 0.5 | 0.5 | 0.5 | 0.27 | | 9.9 | 43.2 | 2 | 44.9 |

### Preparation Example 5

### Preparation of metal-containing copolymer (a2-1)

In a four-necked flask equipped with a condenser, a thermometer, a dropping funnel and a stirrer, 15 parts of propylene glycol methyl ether, 57 parts of xylene and 4 parts of ethyl acrylate were placed, and with stirring, they were heated to 100°C. Subsequently, from the dropping funnel, a transparent mixture consisting of 1 part of methyl methacrylate (MMA), 66.2 parts of ethyl acrylate (EA), 5.4 parts of 2-methoxyethyl acrylate (2-MEA), 52 parts of the mixture solution A obtained in Preparation Example 3, 10 parts of xylene, 1 part of a chain transfer agent (available from Nippon Oil & Fats Co., Ltd., "Nofmer MSD"), 2.5 parts of azobisisobutyronitrile (AIBN, available from Japan Hydrazine Company Inc.) and 7 parts of azobismethylbutyronitrile (AMBN, available from Japan Hydrazine Company Inc.) was dropped at the uniform rate over a period of 6 hours.

After the dropping was completed, 0.5 part of t-butyl peroctoate (TBPO) and 7 parts of xylene were dropped over a period of 30 minutes. After stirring for 1 hour and 30 minutes, 4.4 parts of xylene were added to obtain a light yellow transparent resin composition having a heating residue of 45.6%, a Gardner viscosity (measured in a resin concentration of 35% by weight at 25°C) of "-Y", a number-average molecular weight Mn, as measured by GPC, of 1950 and a weight-average molecular weight Mw of 5200, containing no insoluble matter and containing a metal salt bond-containing copolymer (a2-1).

Properties (Gardner viscosity, solids content (% by weight), molecular weight (Mn, Mw)) of the resulting metal salt bond-containing copolymer (also referred to as "crosslinking metal salt copolymer" hereinafter) (a2-1) or a reaction mixture containing the copolymer are set forth together in Table 3.

### Preparation Example 6

A crosslinking metal salt bond-containing copolymer (a2-2) was prepared in the same manner as in Preparation Example 5, except that the components were changed as shown in Table 3.

Properties of the resulting crosslinking metal salt bond-containing copolymer or a reaction mixture containing the copolymer were evaluated in the same manner as in Preparation Example 5 (preparation example of copolymer (a2-1)). The results are set forth in Table 3.

**Table 3**

| Preparation example of crosslinking metal salt copolymer (a2)) | | | |
|---|---|---|---|
| | | Prep. Ex. 5 | Prep. Ex. 6 |
| Crosslinking metal salt copolymer (a2) | | a2-1 | a2-2 |
| Components (unit: part(s) by weight) | | | |
| Metal-containing monomer mixture solution | A (Prep. Ex. 3) | 52 | |
| | B (Prep. Ex. 4) | | 37.8 |
| Copolymerization monomer | MMA | 1 | 18 |
| | EA | 66.2 | 65 |
| | 2-MEA | 5.4 | |
| Initiator | AIBN | 2.5 | 2.5 |
| | AMBN | 7 | 7 |
| | TBPO | 0.5 | 0.5 |
| Chain transfer agent | Nofmer MSD | 1 | 1 |
| Properties | | | |
| Gardner viscosity | | -Y | +Y |
| Solids content (wt%) | | 45.6 | 46.2 |
| Molecular weight | Mn | 1,950 | 2,200 |
| | Mw | 5,200 | 5,600 |

### Preparation Example 7

### Preparation of silyl ester copolymer (a3-1)

In a reaction vessel equipped with a stirrer, a condenser, a thermometer, a dropping device, a nitrogen feed pipe and a heating/cooling jacket, 100 parts of xylene were placed, and heating and stirring were carried out in a stream of nitrogen at 85°C. With keeping the same temperature, a mixture of 60 parts of triisopropylsilyl acrylate, 40 parts of methyl methacrylate and 0.3 part of 2,2'-azobisisobutyronitrile as a polymerization initiator was dropped into the reaction vessel from the dropping device over a period of 2 hours. Thereafter, stirring was carried out for 4 hours at the same temperature, then 0.4 part of 2,2'-azobisisobutyronitrile was added, and stirring was further carried out for 4 hours at the same temperature to obtain a colorless transparent reaction solution containing a silyl ester copolymer (silyl (meth)acrylate copolymer) (a3-1).

The resulting copolymer (a3-1) had a heating residue (heating residue after drying for 3 hours in a hot air dryer at 105°C) of 51.2% by weight, a viscosity at 25°C (B type viscometer, No.3 rotor) of 408 cps, a number-average molecular weight (Mn), as measured by GPC, of 9735 and a weight-average molecular weight (Mw) of 55650.

The components dropped in the preparation of the copolymer, properties of the product, etc. are set forth together in Table 4.

### ] Preparation Example 8

A silyl ester copolymer (silyl (meth)acrylate copolymer (a3-2) was prepared in the same manner as in Preparation Example 7, except that the components (components dropped) were changed as shown in Table 4.

Properties of the resulting silyl ester copolymer or a reaction mixture containing the copolymer were evaluated in the same manner as in Preparation Example 7 (preparation example of silyl ester copolymer (a3-1)). The results are set forth in Table 4.

**Table 4**

| (Preparation example of silyl ester copolymer (a3)) | | | |
|---|---|---|---|
| | | Prep. Ex. 7 | Prep. Ex. 8 |
| Silyl ester copolymer (a3) | | a3-1 | a3-2 |
| Components (unit: part(s) by weight) | | | |
| Solvent components dropped | Xylene | 100 | 100 |
| | Triisopropylsilyl acrylate | 60 | 50 |
| | Methyl methacrylate | 40 | 45 |
| | 2-Methoxyethyl acrylate | | 5 |
| | 2-2-Azobisisobutylonitrile (initial stage) | 0.3 | 0.5 |
| | Total | 200.3 | 200.5 |
| Additional component | 2-2-Azobisisobutylonitrile (later stage) | 0.4 | 0.4 |
| Properties | | | |
| Solids content (wt%) | | 51.2 | 50.1 |
| Viscosity (cps/25°C) | | 408 | 111 |
| Molecular weight | Mn | 9,735 | 8,354 |
| | Mw | 55,650 | 35,600 |

### Examples 1 to 45 and Comparative Examples 1 to 24

### Preparation of antifouling coating composition

Using the side-chain end structure metal salt copolymers (a1-1) to (a1-2) obtained in Preparation Examples 1 to 2 shown in Table 1, the crosslinking metal salt bond-containing copolymers (a2-1) to (a2-2) obtained in Preparation Examples 5 to 6 shown in Table 3, and the silyl ester copolymers (a3-1) to (a3-2) obtained in Preparation Examples 7 to 8 shown in Table 4, antifouling coating compositions of the formulations shown in Examples 1 to 45 and Comparative Examples 1 to 24 of Tables 5 to 10 were prepared by a conventional process.

### Measurement of film consumption degree of antifouling coating film

The above-obtained antifouling coating compositions of the formulations shown in Tables 5 to 10 were each directly applied by an applicator to a rigid vinyl chloride resin plate (50 mm × 50 mm × thickness 1.5 mm) having been subj ected to no primer treatment so that the dry film thickness would become 150 µm. The resulting test plates with a coating film were each set on a rotary drum placed in the seawater in Nagasaki Bay of Nagasaki Prefecture, then the rotary drum was rotated at a peripheral speed of 15 knots, and a film thickness consumed every month (total (µm) of coating film consumption degree from just after the placement, coating film consumption degree) was measured for 6 months. The results are set forth together in Tables 5 to 10.

### Evaluation of static antifouling properties of antifouling coating film

### Preparation of test plate

To a sandblasted steel plate (length 300 mm × width 100 mm × thickness 3.2 mm), an epoxy anticorrosive coatingmaterial (epoxy AC coating material, trade name: "Bannoh 500", available from Chugoku Marine Paints, Ltd.) was applied so that the dry film thickness would become 150 µm, and then an epoxy binder coating material (trade name; "Bannoh 500N", available from Chugoku Marine Paints, Ltd.) was applied so that the dry film thickness would become 100 µm.

Subsequently, the antifouling coating compositions of the formulations shown in Tables 5 to 10 were each applied once so that the dry film thickness would become 150 µm and then dried to prepare test plates with a coating film. The interval between application of any one of the above coating materials (e.g., "Bannoh 500") and application of another coating material thereon (e.g., "Bannoh 5OON") was 1 day/l coat.

### Test method for static antifouling properties

After the test plate was dried at room temperature for 7 days, it was placed in Nagasaki Bay of Nagasaki Prefecture and allowed to stand still for 6 months. During this period of time, the area (%) of adhesion of fouling organisms was examined every month. The results are set forth together in Tables 5 to 10.

Evaluation criteria of the static antifouling properties (evaluation criteria of area for adhesion of aquatic organisms) are as follows.

### Evaluation criteria for area of adhesion of aquatic organisms (evaluation criteria for static antifouling properties)

0 point: There is no adhesion of the aquatic organisms.

0.5 point: The area of adhesion of the aquatic organisms is about 10%.
1 point: The area of adhesion of the aquatic organisms is about 20%.
2 points: The area of adhesion of the aquatic organisms is about 30%.
3 points: The area of adhesion of the aquatic organisms is about 40%.
4 points: The area of adhesion of the aquatic organisms is about 50%.
5 points: The area of adhesion of the aquatic organisms is about 100%.

### Components

Details of the substances shown in the formulations in the tables, etc. are set forth in Table 11.

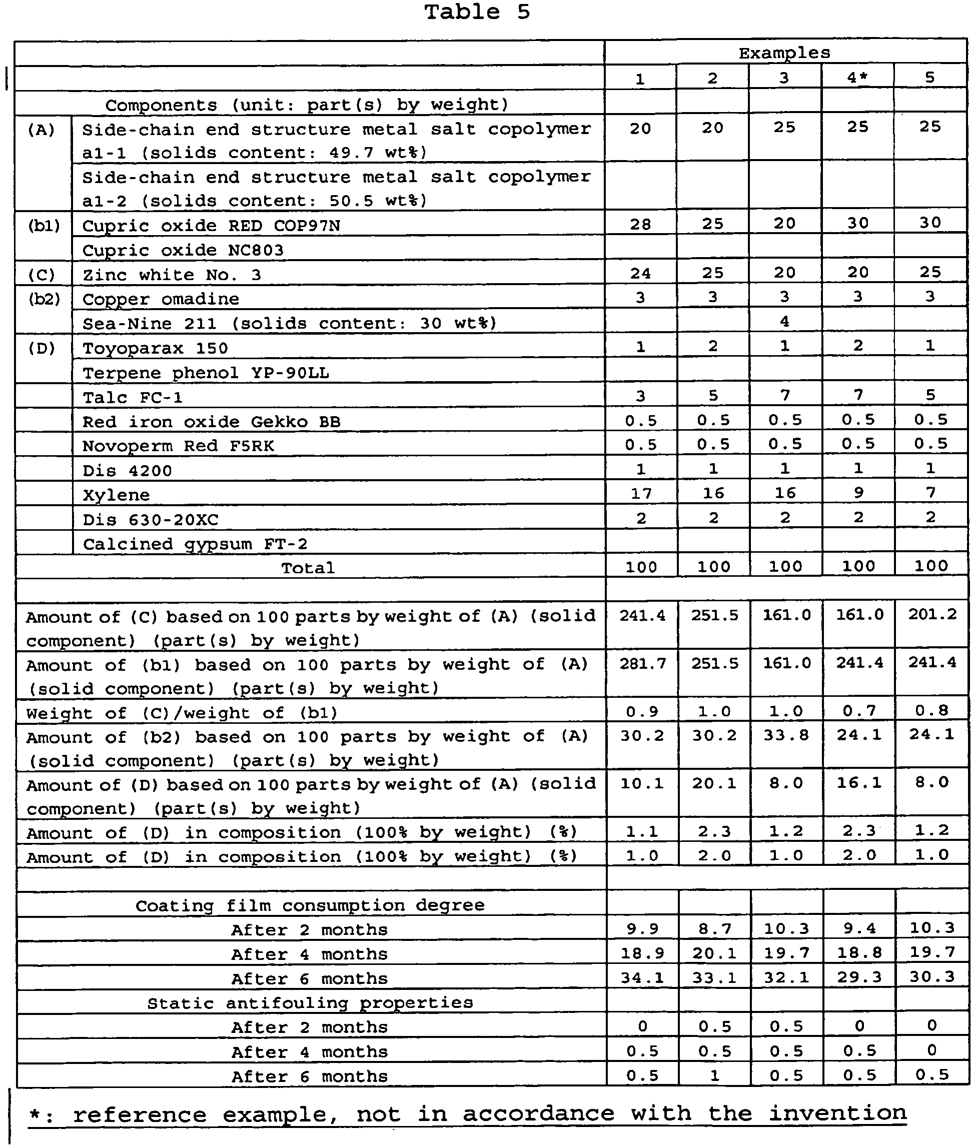

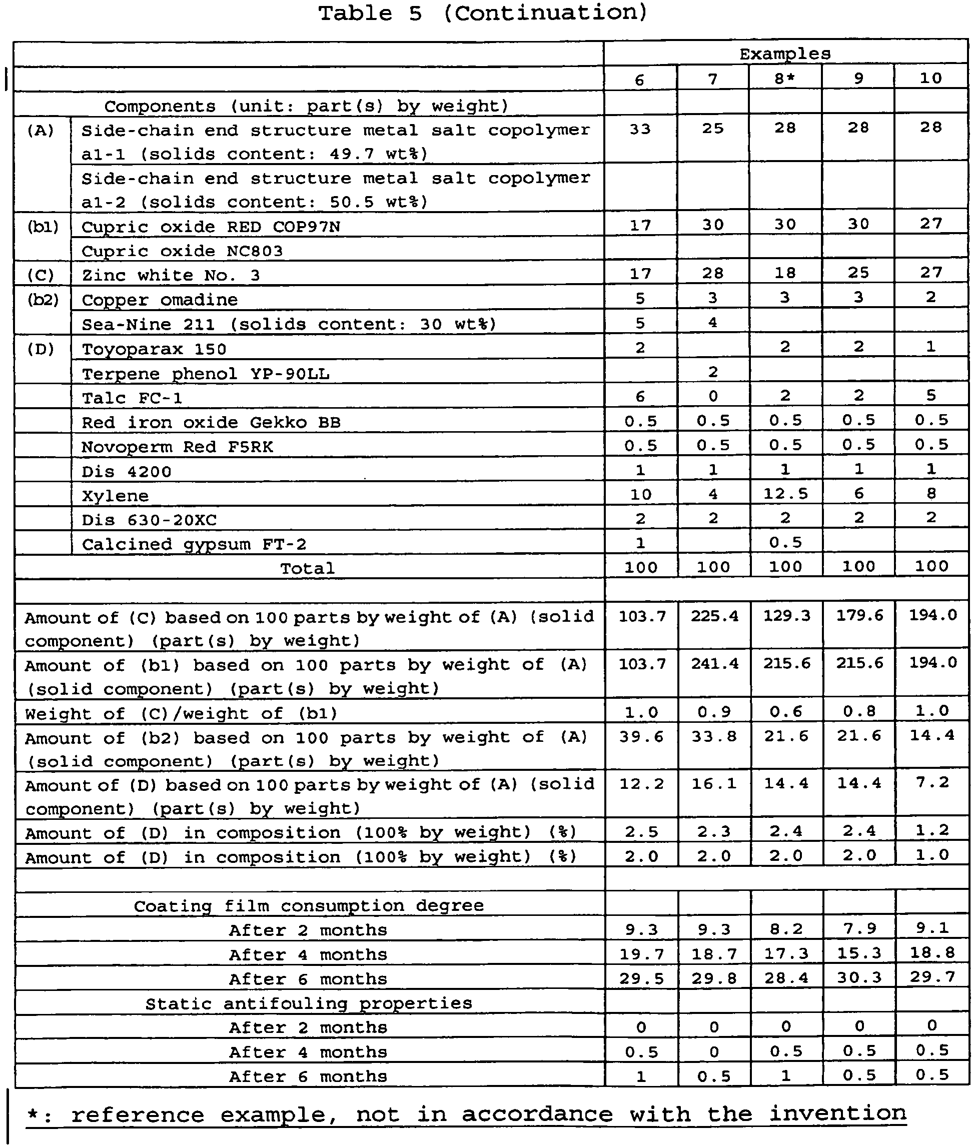

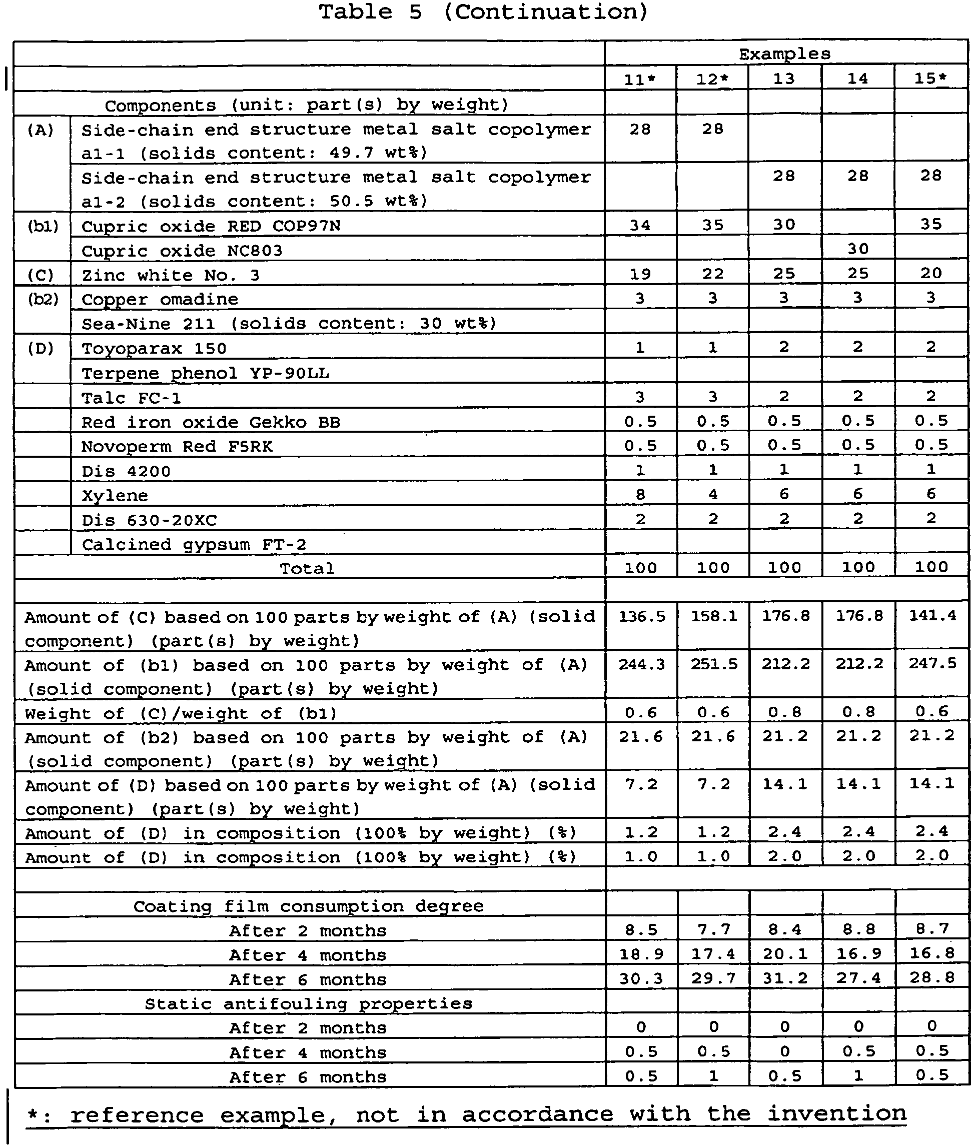

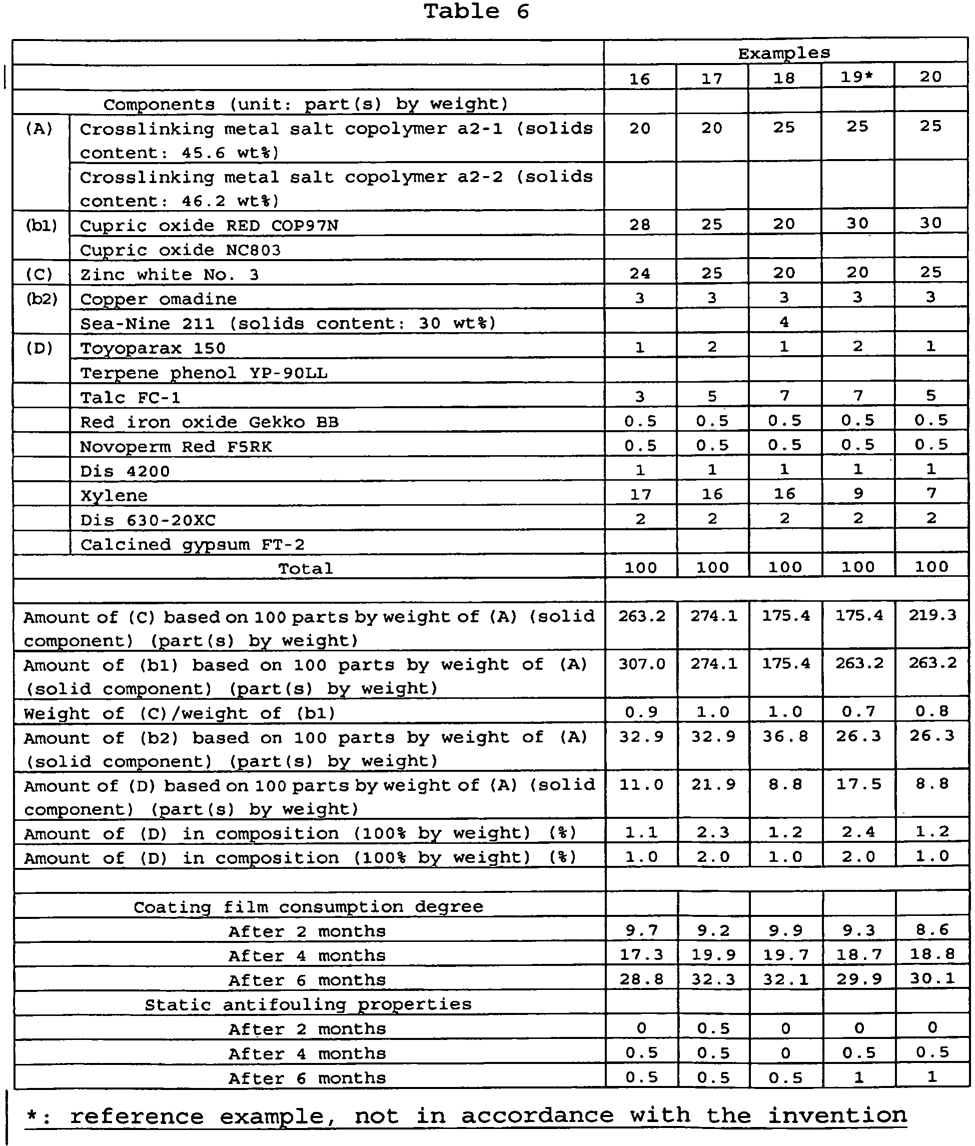

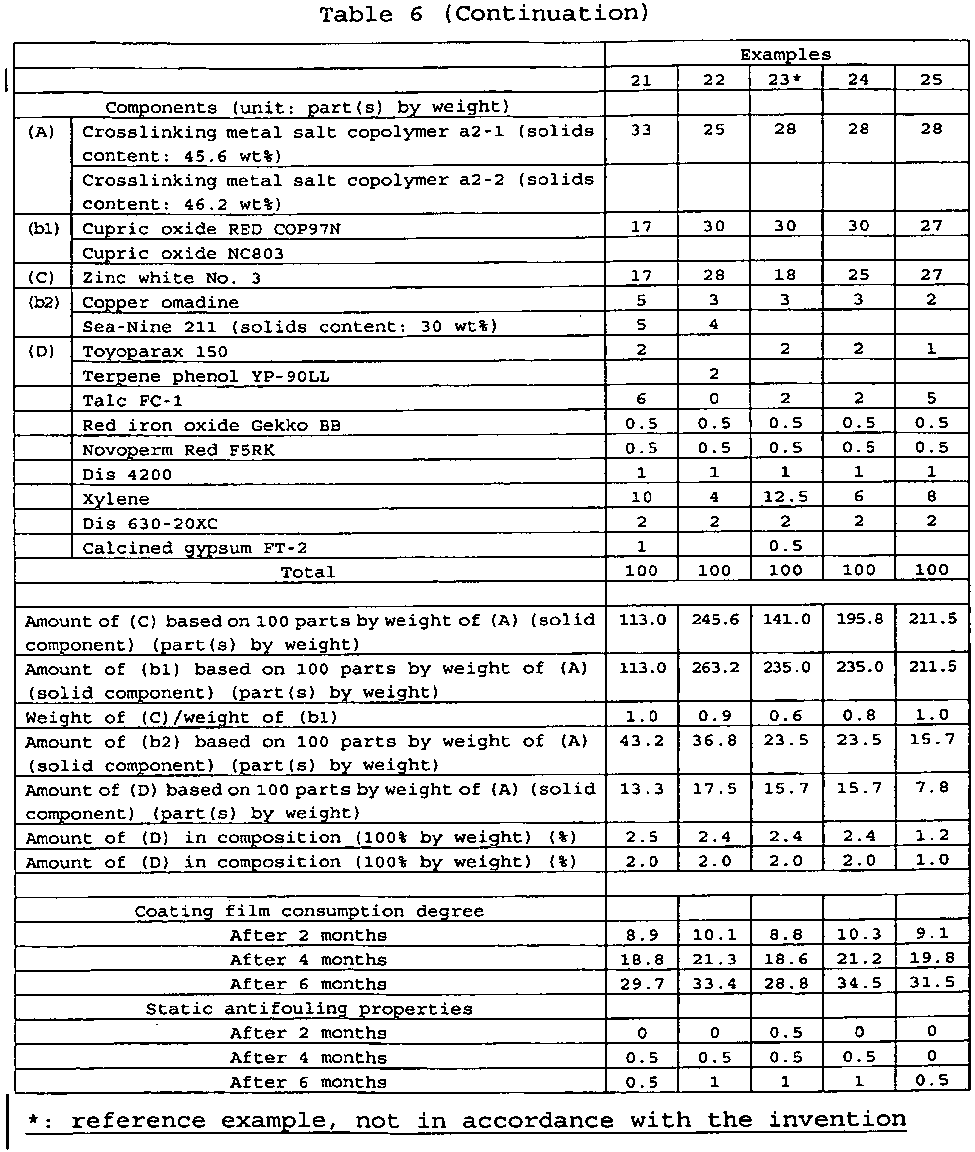

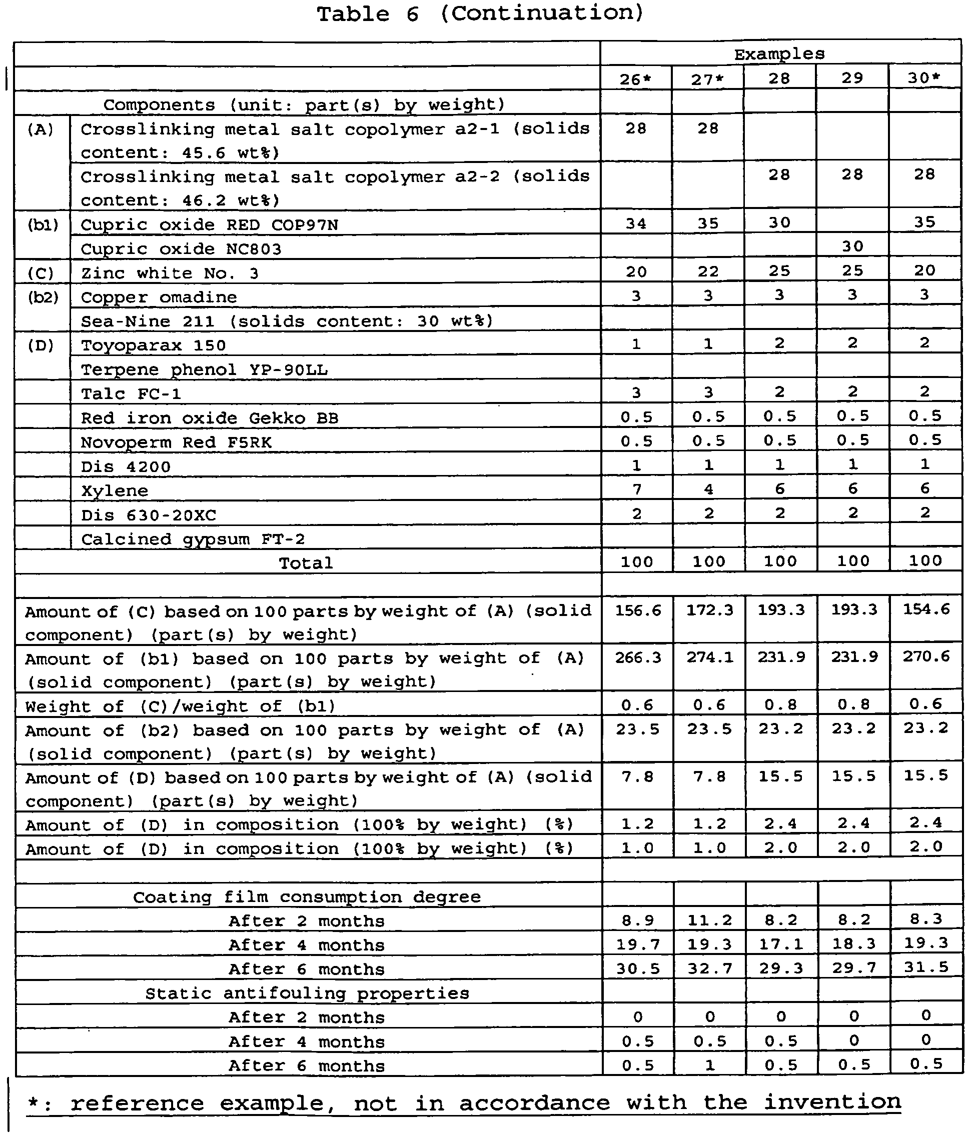

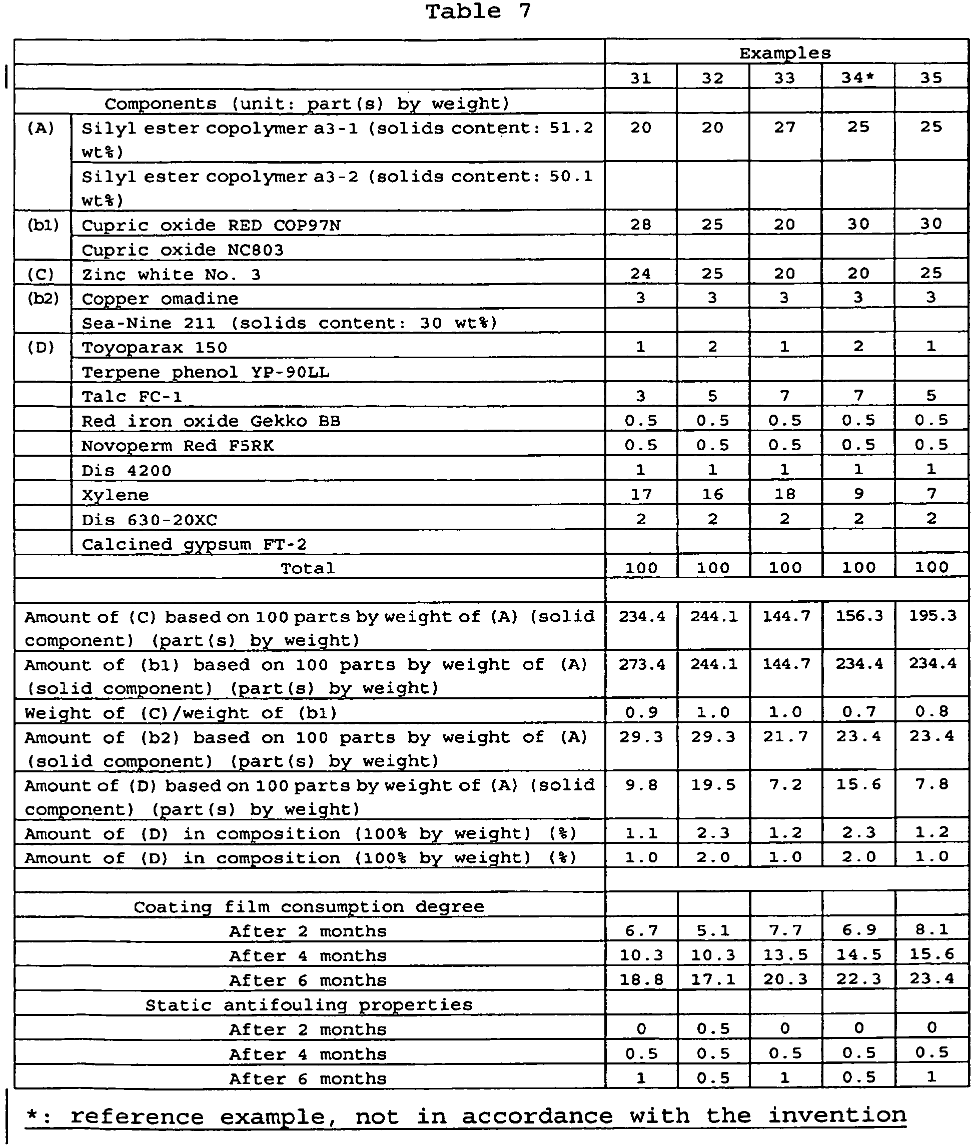

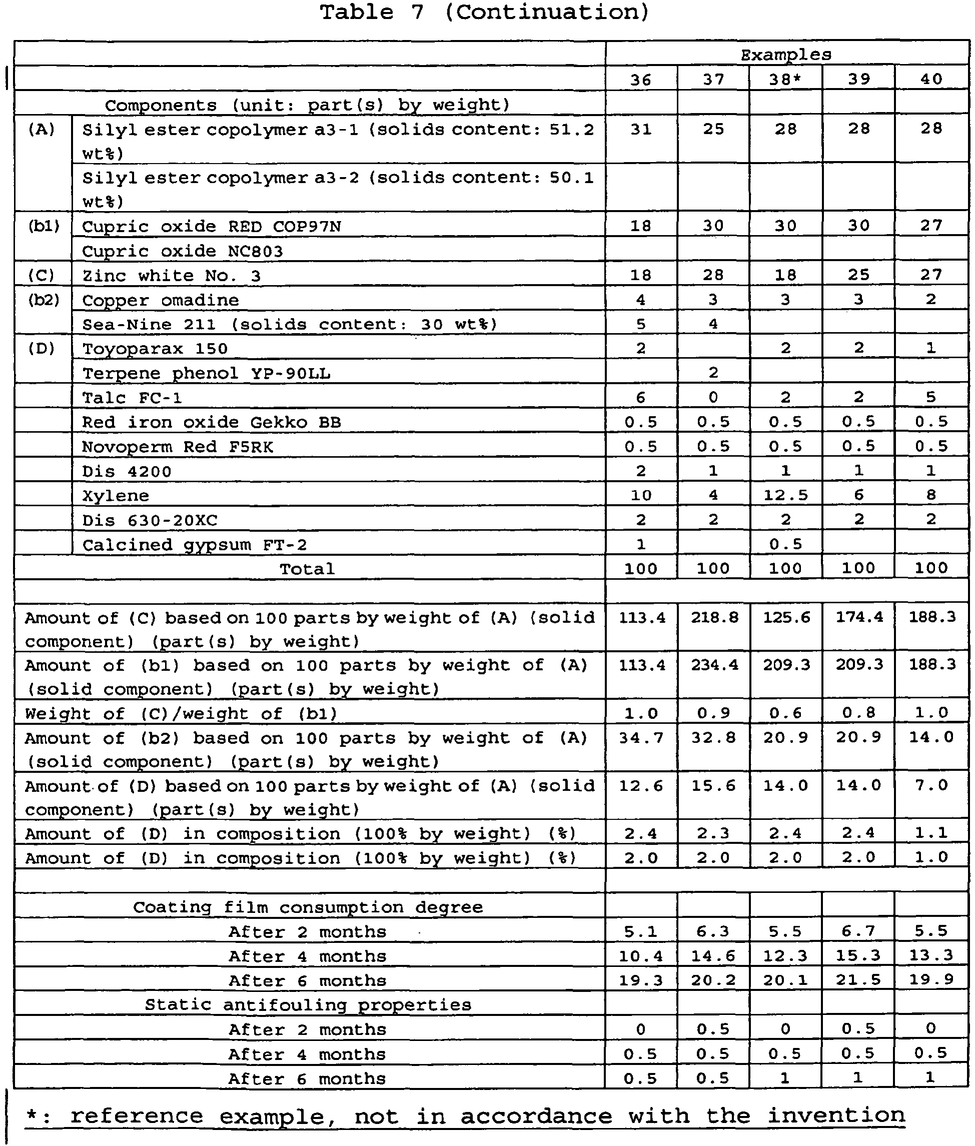

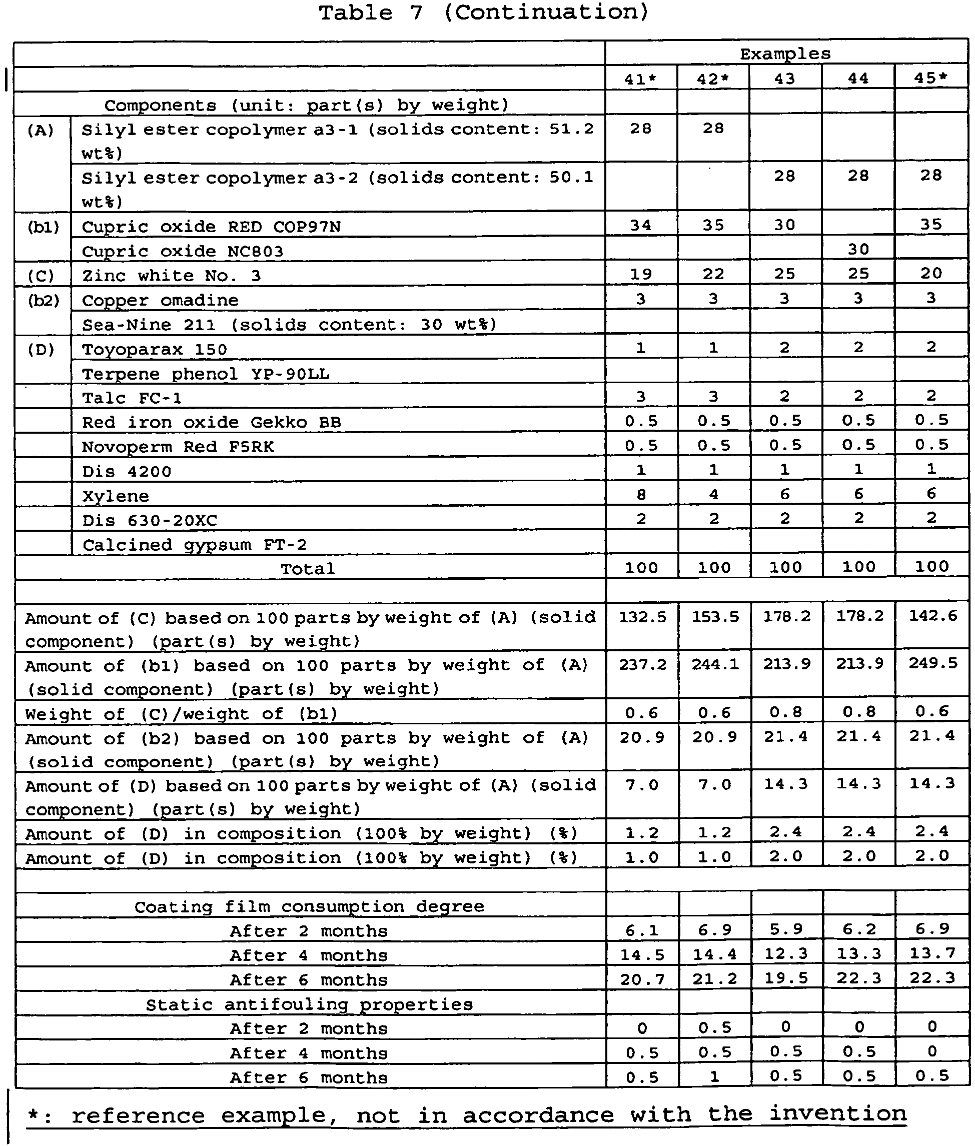

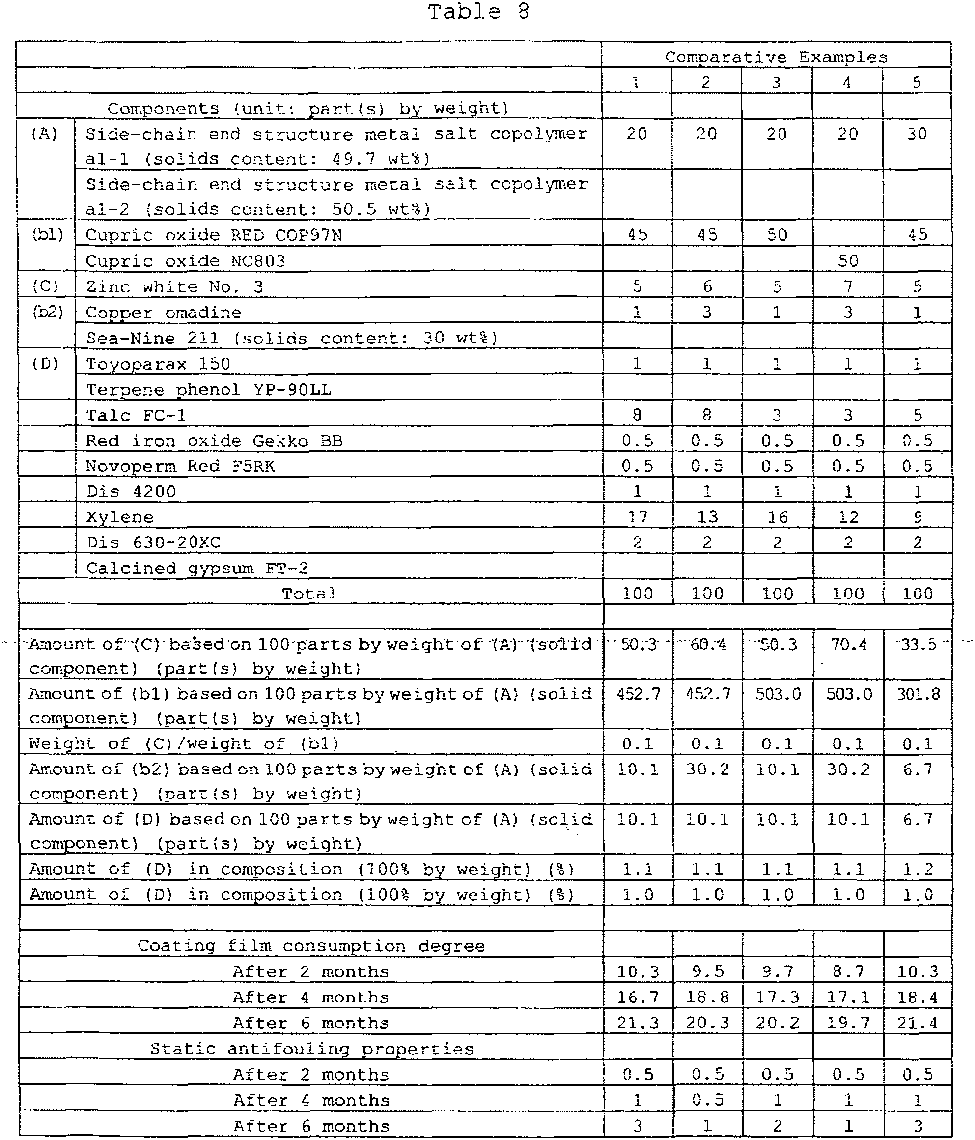

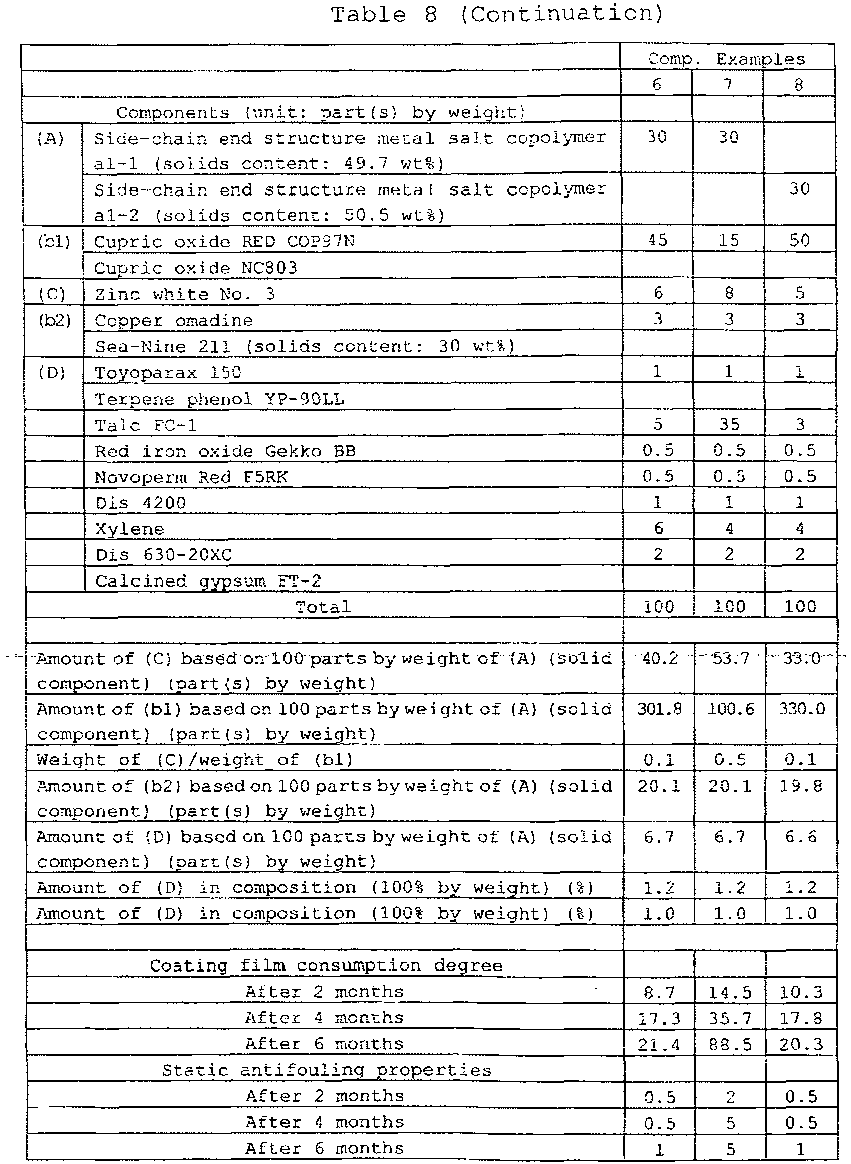

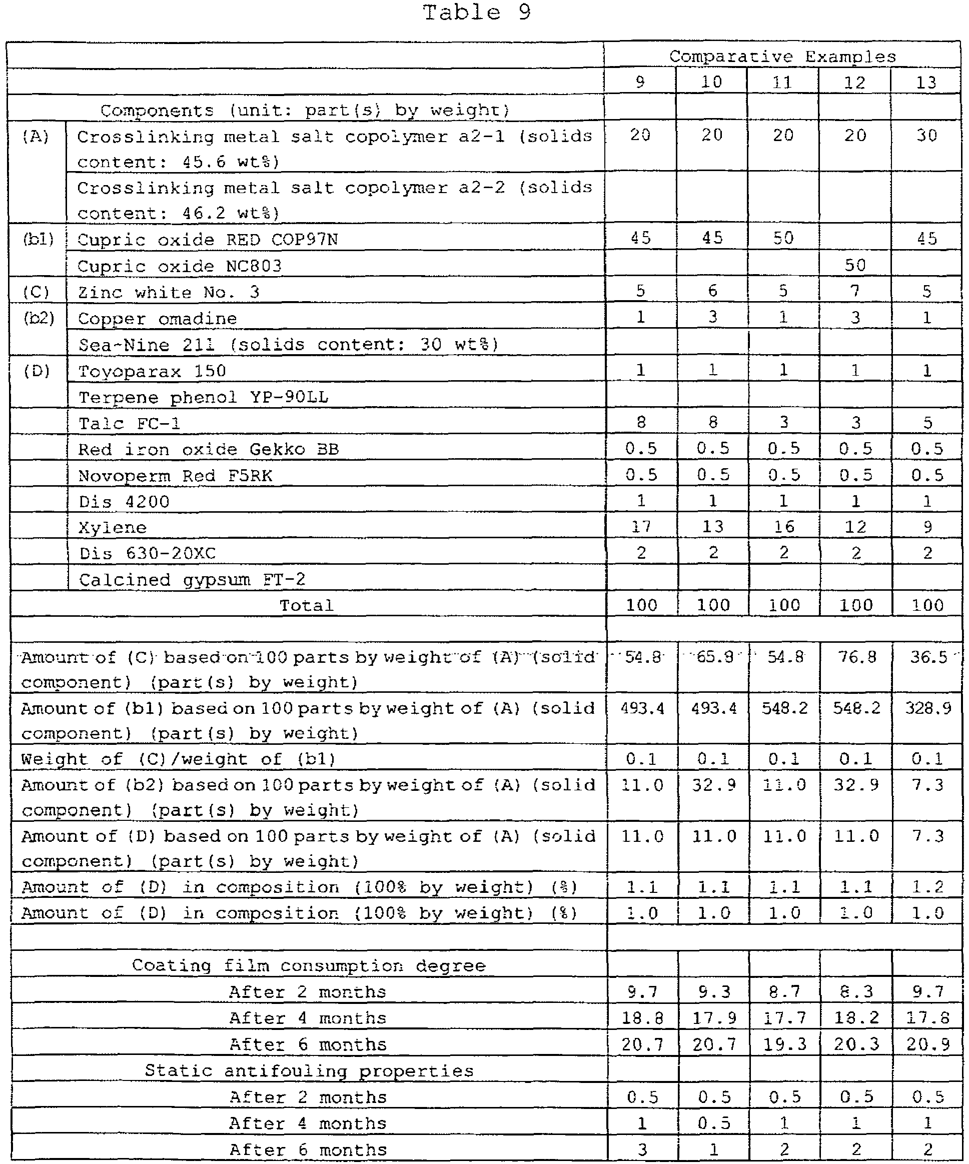

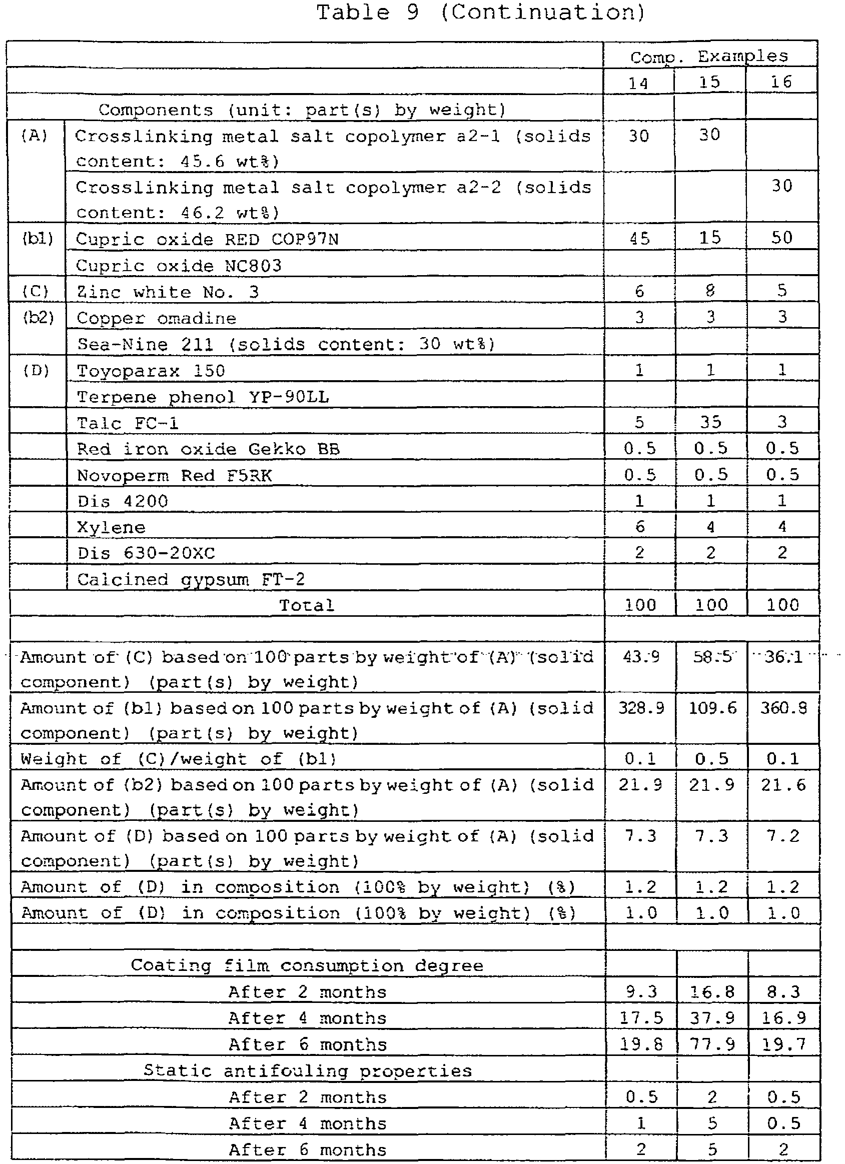

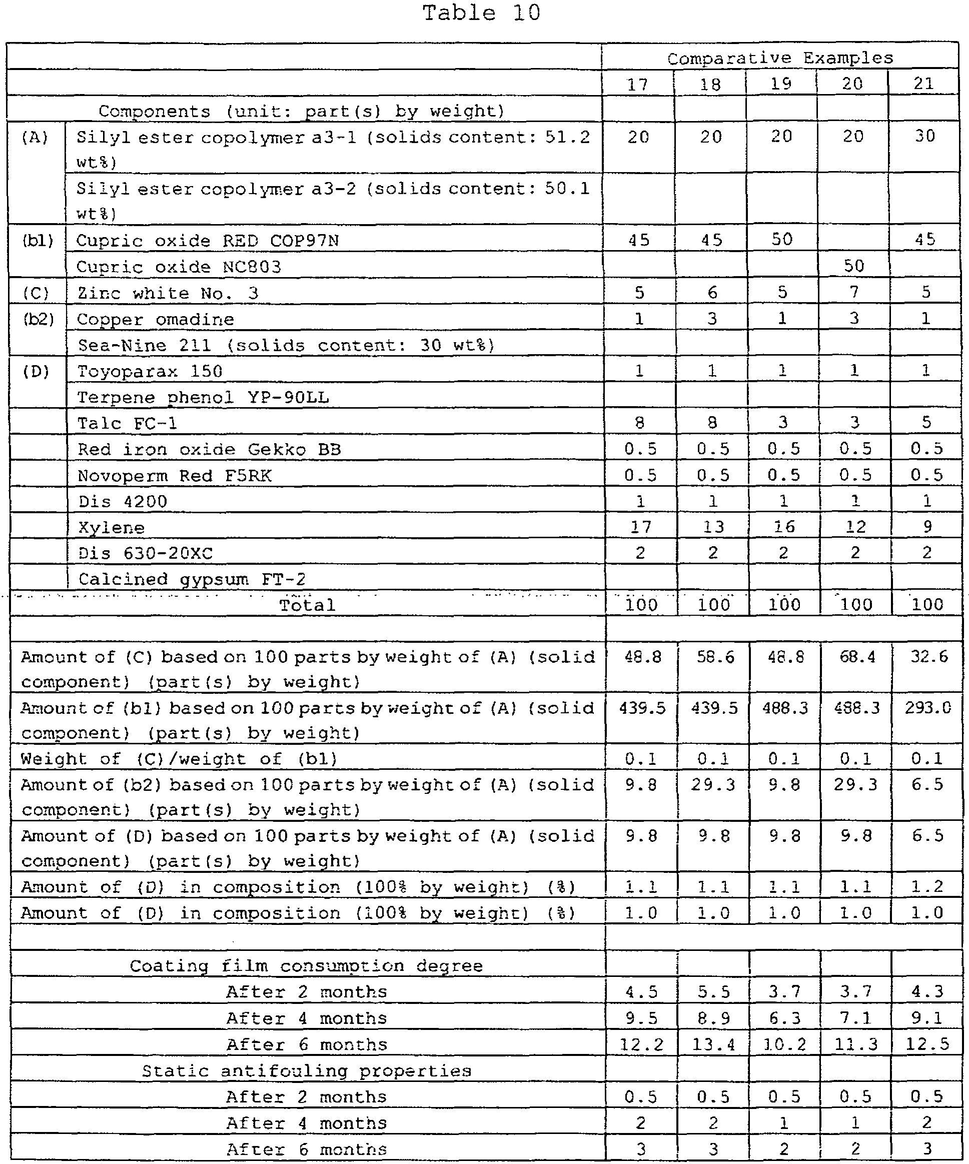

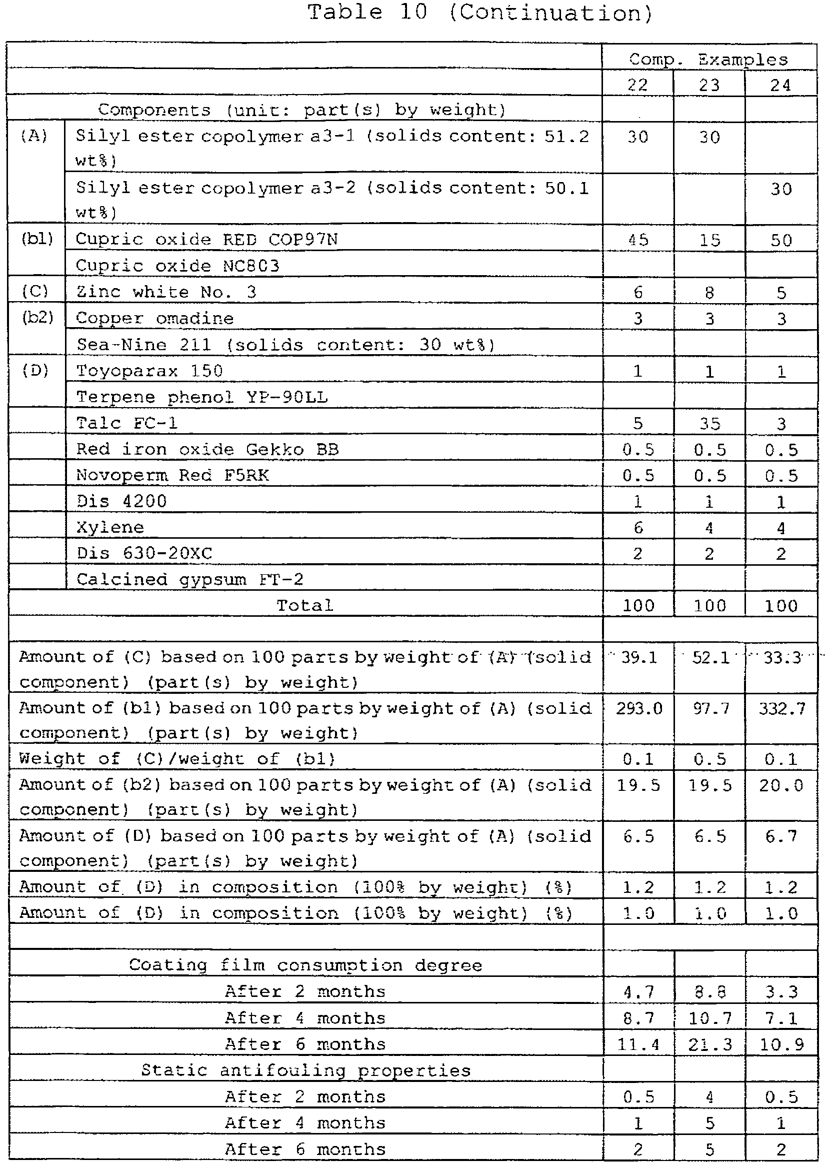

**Table 11**

| (Main raw materials used) | | | |
|---|---|---|---|
| Product name | Maker | Properties, etc. | Notes |
| Toyoparax 150 | Tosoh Corporation | Chlorinated paraffin | |
| Talc FC-1 | Fukuoka Talc Co., Ltd. | Extender pigment | |
| Terpene phenol YP-90LL | Yasuhara Chemical Co., Ltd | Terpene resin | |
| Zinc white No. 3 | Kyushu-Hakusui Corporation | Extender pigment | |
| Red iron oxide Gekko BB | Toda Kogyo Corp. | Color pigment | |
| Novoperm Red F5RK | Clariant North America | Organic red pigment | |
| Dis 4200 (Disperon 4200) | Kusumoto Chemicals, Ltd. | Anti-settling agent | |
| Copper omadine | Yoshitomi Pharmaceutical Industries Ltd. | Organic antifouling agent | Copper salt of 2-oxide thiol-1-oxide |
| Sea-Nine 211 | Rohm and Haas Company | Organic antifouling agent | 4,5-dichloro-2-n-octyl-4-isothiazoline-3-one (solids content: 30% by weight) |
| Calcined gypsum FT-2 | Noritake Co. Ltd. | Inorganic dehydrating agent | |
| Xylene | | | |
| N-BuOH | | | |
| Dis 630-20XC | Kusumoto Chemicals, Ltd. | Anti-sagging agent | |
| Cupric oxide NC803 | | Cupric oxide | |
| Cupric oxide RED COP97N | American Chemet Corporation | Cupric oxide | Medium particle type, stearic acid treatment |

## Claims

1. An antifouling coating composition comprising (A) a hydrolyzable copolymer, (b1) copper and/or an inorganic copper compound and (C) zinc oxide, wherein:
the hydrolyzable copolymer (A) is at least one hydrolyzable copolymer selected from the group consisting of:
(a1) a metal salt bond-containing copolymer which is an acrylic resin or a polyester resin and has, at the end of a side chain, a group represented by the formula (I):
-COO-M-O-COR¹ (I)
wherein M is zinc or copper, and R¹ is an organic group,
with the proviso that the case wherein R¹ is -CH=CH₂ or -C(CH₃)=CH₂ is excluded,
(a2) a metal salt bond-containing copolymer having
a component unit (a21) derived from a monomer (a21) represented by the formula (II):
CH₂=C(R²) -COO-M-O-CO-C(R²)=CH₂ (II)
wherein M is zinc or copper, and each R² is independently a hydrogen atom or a methyl group, and
a component unit (a22) derived from other unsaturated monomer (a22) copolymerizable with the monomer (a21), and
(a3) a silyl ester copolymer having
a component unit (a31) derived from a monomer (a31) represented by the formula (III):
R⁷-CH=C(R³)-COO-SiR⁴R⁵R⁶ (III)
wherein R³ is a hydrogen atom or a methyl group,
R⁴, R⁵ and R⁶ are each independently a hydrocarbon group, and
R⁷ is a hydrogen atom or R⁸-O-CO- (wherein R⁸ is an organic group or a silyl group represented by -SiR⁹R¹⁰R¹¹, and R⁹, R¹⁰ and R¹¹ are each independently a hydrocarbon group), and
a component unit (a32) derived from other unsaturated monomer (a32) copolymerizable with the monomer (a31), and
(1) the content of the copper and/or the inorganic copper compound (b1) is in the range of 100 to 400, preferably 100 to 350, and more preferably 100 to 300 parts by weight, and the content of the zinc oxide (C) is in the range of 50 to 350, preferably 75 to 350, and more preferably 100 to 350 parts by weight, each content being based on 100 parts by weight of the hydrolyzable copolymer (A), and
(2) the weight ratio of the zinc oxide (C) to the copper and/or the inorganic copper compound (b1) (zinc oxide (C)/(copper and/or inorganic copper compound (b1))) is in the range of 0.8 to 1.2.

2. The antifouling coating composition as claimed in claim 1, further comprising at least one of the following components:
- an organic antifouling agent (b2);
- at least one extender pigment selected from the group consisting of talc, clay, calcium carbonate, barium carbonate, diatomaceous earth and silica;
- a plasticizer;
- at least one color pigment which is of organic type or inorganic type.

3. The antifouling coating composition as claimed in claim 2, wherein:
the copper and/or the inorganic copper compound (b1) is cupric oxide;
the organic antifouling agent (b2) is at least one compound selected from the group consisting of a pyrithione compound, a tri-organic boron and its amine complex, and 4,5-dichloro-2-n-octyl-4-isothiazoline-3-one, and is preferably selected from the group consisting of copper pyrithione, zinc pyrithione, triphenylboron pyridine complex, methyldiphenylboron 4-isopropylpyridine complex and 4,5-dichloro-2-octyl-4-isothiazoline-3-one;
the plasticizer is chlorinated paraffin and/or terpene phenol; and
the color pigment is at least one compound selected from the group consisting of red iron oxide, titanium white, yellow iron oxide and an organic pigment.

4. The antifouling coating composition as claimed in claim 2 or 3, wherein based on 100 parts by weight of the hydrolyzable copolymer (A):
- the content of the organic antifouling agent (b2) is in the range of 10 to 500 parts by weight,
- the content of the extender pigment is in the range of 10 to 100 parts by weight, and
- wherein the content of the plasticizer is in the range of 0.05 to 40 parts by weight.

5. The antifouling coating composition as claimed in any one of claims 1 to 4, wherein the metal salt bond-containing copolymer (a1) has a component unit (IV) derived from a monobasic acid metal (meth)acrylate represented by the formula (IV) :
CH₂=C(R²) -COO-M-O-COR¹ (IV)
wherein R¹ is an organic group,
with the proviso that the case wherein R¹ is -CH=CH₂ or -C(CH₃)=CH₂ is excluded,
R² is a hydrogen atom or a methyl group, and M is zinc or copper, and
optionally a component unit (a12) derived from at least one unsaturated compound selected from the group consisting of an alkyl (meth)acrylate, an alkoxyalkyl (meth)acrylate and a hydroxyalkyl (meth)acrylate.

6. The antifouling coating composition as claimed in any one of claims 1 to 5, wherein the organic group R¹ in the metal salt bond-containing copolymer (a1) is a saturated or unsaturated aliphatic monovalent hydrocarbon group having 2 to 30 carbon atoms, which may be substituted, a saturated or unsaturated alicyclic monovalent hydrocarbon group having 3 to 30 carbon atoms, which may be substituted, or an aromatic monovalent hydrocarbon group having 6 to 30 carbon atoms, which may be substituted,
preferably the organic group R¹ is a saturated or unsaturated aliphatic or saturated or unsaturated alicyclic monovalent hydrocarbon group having 9 to 20 carbon atoms, which may be substituted, and
more preferably the organic group R¹ is a residue of at least one monobasic acid (R¹COOH) selected from the group consisting of versatic acid, palmitic acid, stearic acid, isostearic acid, oleic acid, linoleic acid, linolenic acid, abietic acid, neoabietic acid, pimaric acid, dehydroabietic acid, 12-hydroxystearic acid and naphthenic acid.

7. The antifouling coating composition as claimed in any one of claims 1 to 6, wherein the total content of zinc and copper in the metal salt bond-containing copolymer (a1) and/or (a2) is in the range of 0.5 to 20% by weight.

8. The antifouling coating composition as claimed in any one of claims 1 to 7, wherein:
- the monomer (a21) capable of deriving the component unit (a21) in the metal salt bond-containing copolymer (a2) is at least one compound selected from the group consisting of zinc (meth)acrylate and copper (meth)acrylate, and/or
- the other unsaturated monomer (a22) capable of deriving the component unit (a22) in the metal salt bond-containing copolymer (a2) is
a monobasic acid metal (meth)acrylate (IV) represented by the formula (IV):
CH₂=C(R²) -COO-M-O-COR¹ (IV)
wherein R¹ is an organic group, R² is a hydrogen atom or a methyl group, and M is zinc or copper, and/or
at least one unsaturated compound selected from the group consisting of an alkyl (meth)acrylate, an alkoxyalkyl (meth)acrylate and a hydroxyalkyl (meth)acrylate and preferably selected from the group consisting of methyl (meth)acrylate, ethyl (meth)acrylate, butyl (meth)acrylate and 2-hydroxyethyl (meth)acrylate.

9. The antifouling coating composition as claimed in any one of claims 1 to 8, wherein the metal salt bond-containing copolymer (a2) is a copolymer having,
as the component unit (a21), a component unit derived from at least one compound selected from the group consisting of zinc (meth)acrylate and copper (meth)acrylate, and
as the component unit (a22):
- a component unit derived from at least one unsaturated compound selected from the group consisting of methyl (meth)acrylate, ethyl (meth)acrylate, butyl (meth)acrylate and 2-hydroxyethyl (meth)acrylate or
- a component unit derived from a monobasic acid metal (meth)acrylate (IV) represented by the formula (IV):
CH₂=C(R²)-COO-M-O-COR¹ (IV)
wherein R¹ is an organic group, R² is a hydrogen atom or a methyl group, and M is zinc or copper.

10. The antifouling coating composition as claimed in claim 9, wherein the metal salt bond-containing copolymer (a2) is a copolymer having, as the component units (a22), a component unit derived from a monobasic acid metal (meth)acrylate (IV) represented by formula (IV) as defined in claim 9, and
a component unit derived from at least one unsaturated compound selected from the group consisting of an alkyl (meth)acrylate, an alkoxyalkyl (meth)acrylate and a hydroxyalkyl (meth)acrylate, preferably selected from the group consisting of methyl (meth)acrylate, ethyl (meth)acrylate, butyl (meth)acrylate and 2-hydroxyethyl (meth)acrylate.

11. The antifouling coating composition as claimed in any one of claims 8 to 10, wherein the organic group R¹ in the monobasic acid metal (meth)acrylate (IV) is a saturated or unsaturated aliphatic or saturated or unsaturated alicyclic monovalent hydrocarbon group having 9 to 20 carbon atoms, which may be substituted, and R¹ is preferably a residue of at least one monobasic acid (R¹COOH) selected from the group consisting of versatic acid, palmitic acid, stearic acid, isostearic acid, oleic acid, linoleic acid, linolenic acid, abietic acid, neoabietic acid, pimaric acid, dehydroabietic acid, 12-hydroxystearic acid and naphthenic acid.

12. The antifouling coating composition as claimed in any one of claims 1 to 11, wherein the monomer (a31) capable of deriving the component unit (a31) in the silyl ester compound (a3) is a trialkylsilyl (meth)acrylate, the trialkylsilyl (meth)acrylate preferably being triisopropylsilyl (meth)acrylate, and/or
wherein the other unsaturated monomer (a32) capable of deriving the component unit (a32) in the silyl ester compound (a3) is at least one unsaturated compound selected from the group consisting of an alkyl (meth)acrylate, an alkoxyalkyl (meth)acrylate and a hydroxyalkyl (meth)acrylate, preferably selected from the group consisting of methyl (meth)acrylate, ethyl (meth)acrylate, butyl (meth)acrylate and 2-hydroxyethyl (meth)acrylate.

13. An antifouling coating film formed from the antifouling coating composition of any one of claims 1 to 12.

14. A method for forming a coating film on a surface of a substrate, wherein the substrate preferably is an underwater structure, a ship's outside plating, a fishing net or a fishing gear, which method comprises coating or impregnating a surface of the substrate with the antifouling coating composition of any one of claims 1 to 12 and then curing the composition to form a coating film.

15. A substrate with a coating film obtainable by the method of claim 14.

## Patentansprüche

1. Antifouling-Beschichtungszusammensetzung, umfassend (A) ein hydrolysierbares Copolymer, (b1) Kupfer und/oder eine anorganische Kupferverbindung und (C) Zinkoxid, wobei:
das hydrolysierbare Copolymer (A) mindestens ein hydrolysierbares Copolymer ist, ausgewählt aus der Gruppe bestehend aus:
(a1) einem Metallsalzbindung-haltigen Copolymer, das ein Acrylharz oder ein Polyesterharz ist und am Ende einer Seitenseite eine durch die folgende Formel (I) dargestellte Gruppe aufweist:
-COO-M-O-COR¹ (I)
worin M Zink oder Kupfer ist und R¹ eine organische Gruppe ist, unter der Voraussetzung, dass der Fall, in dem R¹ -CH=CH₂ oder -C(CH₃)=CH₂ ist, ausgeschlossen ist,
(a2) einem Metallsalzbindung-haltigen Copolymer mit einer Bestandteileinheit (a21), die aus einem Monomer (a21) abgeleitet ist, das durch die Formel (II) dargestellt wird:
-CH₂=C(R²)-COO-M-O-CO-C(R²)=CH₂ (II)
worin M Zink oder Kupfer ist und jedes R² unabhängig voneinander ein Wasserstoffatom oder eine Methylgruppe ist, und
eine Betsnadteileinheit (a22), die von einem anderen ungesättigten Monomer (a21) abgeleitet ist, das mit dem Monomer (a21) copolymerisierbar ist, und
(a3) einem Silylester-Copolymer mit
einer Bestandteileinheit (a31), die von einem Monomer (a31) abgeleitet ist, das durch die Formel (III) dargestellt wird:
R⁷-CH=C(R³)-COO-SiR⁴R⁵R⁶ (III)
worin R³ ein Wasserstoffatom oder eine Methylgruppe ist,
R⁴, R⁵ und R⁶ jeweils unabhängig voneinander eine Kohlenwasserstoffgruppe sind und
R⁷ ein Wasserstoffatom oder R⁸-O-CO- ist (worin R⁸ eine organische Gruppe oder eine durch -SiR⁹R¹⁰R¹¹ dargestellte Silylgruppe ist und R⁹, R¹⁰ und R¹¹ jeweils unabhängig voneinander eine Kohlenwasserstoffgruppe sind), und
einer Bestandteileinheit (a32), die von einem anderen ungesättigten Monomer (a32) abgeleitet ist, das mit dem Monomer (a31) copolymerisierbar ist, und
(1) der Gehalt an Kupfer- und/oder der anorganischen Kupferverbindung (b1) im Bereich von 100 bis 400, vorzugsweise 100 bis 350 und stärker bevorzugt 100 bis 300 Gewichtsteile liegt und der Gehalt an Zinkoxid (C) im Bereich von 50 bis 350, vorzugsweise 75 bis 350 und stärker bevorzugt 100 bis 350 Gewichtsteile liegt, wobei der jeweilige Gehalt auf 100 Gewichtsteile des hydrolysierbaren Copolymers (A) bezogen ist, und
(2) das Gewichtsverhältnis des Zinkoxids (C) zu dem Kupfer und/oder der anorganischen Kupferverbindung (b1) (Zinkoxid (C)/(Kupfer- und/oder anorganische Kupferverbindung (b1))) im Bereich von 0,8 bis 1,2 liegt.

2. Antifouling-Beschichtungszusammensetzung gemäß Anspruch 1, ferner umfassend mindestens eine der folgenden Komponenten:
- ein organisches Antifoulingmittel (b2),
- mindestens ein Extender-Pigment, ausgewählt aus der Gruppe bestehend aus Talk, Ton, Calciumcarbonat, Bariumcarbonat, Kieselgur und Silica,
- einen Weichmacher,
- mindestens ein Farbpigment, das organischer oder anorganischer Art ist.

3. Antifouling-Beschichtungszusammensetzung gemäß Anspruch 2, wobei:
das Kupfer und/oder die anorganische Kupferverbindung (b1) Kupferoxid ist,
das organische Antifoulingmittel (b2) mindestens eine Verbindung ist, ausgewählt aus der Gruppe bestehend aus einer Pyrithionverbindung, einem triorganischen Bor und seinem Aminkomplex und 4,5-Dichlor-2-n-octyl-4-isothiazolin-3-on, und vorzugsweise aus der Gruppe ausgewählt ist, die aus Kupferpyrithion, Zinkpyrithion, Triphenylborpyridin-Komplex, Methyldiphenylbor-4-isopropylpyridin-Komplex und 4,5-Dichlor-2-octyl-4-isothiazolin-3-on besteht,
der Weichmacher ein chloriertes Paraffin und/oder Terpenphenol ist und
das Farbpigment mindestens eine Verbindung, ausgewählt aus der Gruppe bestehend aus rotem Eisenoxid, Titanweiß, gelbem Eisenoxid und einem organischen Pigment, ist.

4. Antifouling-Beschichtungszusammensetzung gemäß Anspruch 2 oder 3, wobei bezogen auf 100 Gewichtsteile des hydrolysierbaren Copolymers (A):
- der Gehalt an organischen Antifoulingmittel (b2) im Bereich von 10 bis 500 Gewichtsteile liegt,
- der Gehalt an Extender-Pigment im Bereich von 10 bis 100 Gewichtsteile liegt und
- der Gehalt an Weichmacher im Bereich von 0,05 bis 40 Gewichtsteile liegt.

5. Antifouling-Beschichtungszusammensetzung gemäß irgendeinem der Ansprüche 1 bis 4, wobei das Metallsalzbindung-haltige Copolymer (a1) eine Bestandteileinheit (IV), die von einem durch die Formel (IV) dargestelltem Metall(meth)acrylat einer monobasischen Säure abgeleitet ist;
CH₂=C(R²)-COO-M-O-COR¹ (IV)
worin R¹ eine organische Gruppe ist,
unter der Voraussetzung, dass der Fall, worin R¹ -CH=CH₂ oder -C(CH₃)=CH₂ ist, ausgeschlossen ist,
R² ein Wasserstoffatom oder eine Methylgruppe ist und M Zink oder Kupfer ist und
optional eine Bestandteileinheit (a12) aufweist, die aus mindestens einer ungesättigten Verbindung abgeleitet ist, die aus der Gruppe ausgewählt ist, die aus einem Alkyl(meth)acrylat, einem Alkoxyalkyl(meth)acrylat und einem Hydroxyalkyl(meth)acrylat besteht.

6. Antifouling-Beschichtungszusammensetzung gemäß irgendeinem der Ansprüche 1 bis 5, wobei die organische Gruppe R¹ in dem Metallsalzbindung-haltigen Copolymer (a1) eine gesättigte oder ungesättigte aliphatische monovalente Kohlenwasserstoffgruppe mit 2 bis 30 Kohlenstoffatomen, die substituiert sein kann, eine gesättigte oder ungesättigte alicyclische monovalente Kohlenwasserstoffgruppe mit 3 bis 30 Kohlenstoffatomen, die substituiert sein kann, oder eine aromatische monovalente Kohlenwasserstoffgruppe mit 6 bis 30 Kohlenstoffatomen ist, die substituiert sein kann,
die organische Gruppe R¹ vorzugsweise eine gesättigte oder ungesättigte aliphatische oder gesättigte oder ungesättigte alicyclische monovalente Kohlenwasserstoffgruppe mit 9 bis 20 Kohlenstoffatomen, die substituiert sein kann, ist und
die organische Gruppe R¹ stärker bevorzugt ein Rest von mindestens einer monobasischen Säure (R¹COOH) ist, die aus der Gruppe ausgewählt ist, die aus Versaticsäure, Palmitinsäure, Stearinsäure, Isostearinsäure, Ölsäure, Linolsäure, Linolensäure, Abietinsäure, Neoabietinsäure, Pimarsäure, Dehydroabietinsäure, 12-Hydroxystearinsäure und Naphthensäure besteht.

7. Antifouling-Beschichtungszusammensetzung gemäß irgendeinem der Ansprüche 1 bis 6, wobei der Gesamtgehalt an Zink und Kupfer in dem Metallsalzbindung-haltigen Copolymer (a1) und/oder (a2) im Bereich von 0,5 bis 20 Gew.-% liegt.

8. Antifouling-Beschichtungszusammensetzung gemäß irgendeinem der Ansprüche 1 bis 7, wobei:
- das Monomer (a21), das geeignet ist, die Bestandteileinheit (a21) in dem Metallsalzbindung-haltigen Copolymer (a2) zu bilden, mindestens eine Verbindung ist, die aus der Gruppe ausgewählt ist, die aus Zink(meth)acrylat und Kupfer(meth)acrylat besteht, und/oder
- das andere ungesättigte Monomer (a22), das geeignet ist, die Bestandteileinheit (a22) in dem Metallsalzbindung-haltigen Copolymer (a2) zu bilden,
ein durch die Formel (IV) dargestellten Metall(meth)acrylat einer monobasischen Säure (IV):
CH₂=C(R²)-COO-M-O-COR¹ (IV)
worin R¹ eine organische Gruppe ist, R² ein Wasserstoffatom oder eine Methylgruppe ist und M Zink oder Kupfer ist, und/oder
mindestens eine ungesättigte Verbindung ist, die aus der Gruppe ausgewählt ist, die aus einem Alkyl(meth)acrylat, einem Alkoxyalkyl(meth)acrylat und einem Hydroxyalkyl(meth)acrylat besteht und vorzugsweise aus der Gruppe ausgewählt ist, die aus Methyl(meth)acrylat, Ethyl(meth)acrylat, Butyl(meth)acrylat und 2-Hydroxyethyl(meth)acrylat besteht.

9. Antifouling-Beschichtungszusammensetzung gemäß irgendeinem der Ansprüche 1 bis 8, wobei das Metallsalzbindung-haltige Copolymer (a2) ein Copolymer ist, das
als Bestandteileinheit (a21) eine Bestandteileinheit abgeleitet von mindestens einer Verbindung ausgewählt aus der Gruppe bestehend aus Zink(meth)acrylat und Kupfer(meth)acrylat,
und als Bestandteileinheit (a22) folgende aufweist:
- eine Bestandteileinheit, abgeleitet aus mindestens einer ungesättigten Verbindung, ausgewählt aus der Gruppe bestehend aus Methyl(meth)acrylat, Ethyl(meth)acrylat, Butyl(meth)acrylat und 2-Hydroxyethyl(meth)acrylat, oder
- eine Bestandteileinheit, abgeleitet aus einem durch die Formel (IV) dargestellten Metall(meth)acrylat einer monobasischen Säure (IV):
CH₂=C(R²)-COO-M-O-COR¹ (IV)
worin R¹ eine organische Gruppe ist, R² ein Wasserstoffatom oder eine Methylgruppe ist und M Zink oder Kupfer ist.

10. Antifouling-Beschichtungszusammensetzung gemäß Anspruch 9, wobei das Metallsalzbindung-haltige Copolymer (a2) ein Copolymer ist, das als Bestandteileinheiten (a22) eine Bestandteileinheit, abgeleitet aus einem durch die Formel (IV) dargestellten Metall(meth)acrylat einer monobasischen Säure (IV), wie in Anspruch 9 definiert, und eine Bestandteileinheit, abgeleitet von mindestens einer ungesättigten Verbindung, ausgewählt aus der Gruppe bestehend aus einem Alkyl(meth)acrylat, einem Alkoxyalkyl(meth)acrylat und einem Hydroxyalkyl(meth)acrylat, vorzugsweise ausgewählt aus der Gruppe bestehend aus Methyl(meth)acrylat, Ethyl(meth)acrylat, Butyl(meth)acrylat und 2-Hydroxyethyl(meth)acrylat, aufweist.

11. Antifouling-Beschichtungszusammensetzung gemäß irgendeinem der Ansprüche 8 bis 10, wobei die organische Gruppe R¹ in dem Metall(meth)acrylat der monobasischen Säure (IV) eine gesättigte oder ungesättigte aliphatische oder gesättigte oder ungesättigte alicyclische monovalente Kohlenwasserstoffgruppe mit 9 bis 20 Kohlenstoffatomen, die substituiert sein kann, ist und R¹ vorzugsweise ein Rest von mindestens einer monobasischen Säure (R¹COOH), ausgewählt aus der Gruppe bestehend aus Versaticsäure, Palmitinsäure, Stearinsäure, Isostearinsäure, Ölsäure, Linolsäure, Linolensäure, Abietinsäure, Neoabietinsäure, Pimarsäure, Dehydroabietinsäure, 12-Hydroxystearinsäure und Naphthensäure, ist.

12. Antifouling-Beschichtungszusammensetzung gemäß irgendeinem der Ansprüche 1 bis 11, wobei das Monomer (a31), das geeignet ist, die Bestandteileinheit (a31) in der Silylesterverbindung (a3) zu bilden, ein Trialkylsilyl(meth)acrylat ist, wobei das Trialkylsilyl(meth)acrylat vorzugsweise Triisopropylsilyl(meth)acrylat ist, und/oder
wobei das andere ungesättigte Monomer (a32), das geeignet ist, die Bestandteileinheit (a32) in der Silylesterverbindung (a3) zu bilden, mindestens eine ungesättigte Verbindung, ausgewählt aus der Gruppe bestehend aus einem Alkyl(meth)acrylat, einem Alkoxyalkyl(meth)acrylat und einem Hydroxyalkyl(meth)acrylat, vorzugsweise ausgewählt aus der Gruppe bestehend aus Methyl(meth)acrylat, Ethyl(meth)acrylat, Butyl(meth)acrylat und 2-Hydroxyethyl(meth)acrylat, ist.

13. Antifouling-Beschichtungsfilm, der aus der Antifouling-Beschichtungszusammensetzung gemäß irgendeinem der Ansprüche 1 bis 12 gebildet ist.

14. Verfahren zur Bildung eines Beschichtungsfilms auf einer Oberfläche eines Substrats, wobei das Substrat vorzugsweise eine Struktur unter Wasser, eine Außenhaut eines Schiffs, ein Fischernetz oder eine Fischereiausrüstung ist, wobei das Verfahren das Beschichten oder Imprägnieren einer Oberfläche des Substrats mit der Antifouling-Beschichtungszusammensetzung gemäß irgendeinem der Ansprüche 1 bis 12 und das anschließende Härten der Zusammensetzung zur Bildung eines Beschichtungsfilms umfasst.

15. Substrat mit einem Beschichtungsfilm erhältlich durch das Verfahren gemäß Anspruch 14.

## Revendications

1. Composition de revêtement anti-salissures comprenant (A) un copolymère hydrolysable, (b1) du cuivre et/ou un composé inorganique de cuivre et (C) de l'oxyde de zinc, dans laquelle :
le copolymère hydrolysable (A) est au moins un copolymère hydrolysable choisi parmi le groupe consistant en :
(a1) un copolymère contenant une liaison ionique métallique qui est une résine acrylique ou une résine de polyester et a, à l'extrémité d'une chaîne latérale, un groupe représenté par la formule (I) :
-COO-M-O-COR¹ (I)
dans laquelle M est le zinc ou le cuivre, et R¹ est un groupe organique, sous réserve que le cas dans lequel R¹ est -CH=CH₂ ou -C(CH₃)=CH₂ est exclu,
(a2) un copolymère contenant une liaison ionique métallique ayant
une unité constitutive (a21) dérivée d'un monomère (a21) représenté par la formule (II) :
CH₂=C(R²) -COO-M-O-CO-C(R²)=CH₂ (II)
dans laquelle M est le zinc ou le cuivre, et chaque R² est indépendamment un atome d'hydrogène ou un groupe méthyle, et
une unité constitutive (a22) dérivée d'un autre monomère insaturé (a22) copolymérisable avec le monomère (a21), et
(a3) un copolymère d'ester silylique ayant
une unité constitutive (a31) dérivée d'un monomère (a31) représenté par la formule (III) :
R⁷-CH=C(R³)-COO-SiR⁴R⁵R⁶ (III)
dans laquelle R³ est un atome d'hydrogène ou un groupe méthyle,
R⁴, R⁵ et R⁶ sont chacun indépendamment un groupe hydrocarboné, et
R⁷ est un atome d'hydrogène ou R⁸-O-CO- (dans laquelle R⁸ est un groupe organique ou un groupe silyle représenté par -SiR⁹R¹⁰R¹¹, et R⁹, R¹⁰ et R¹¹ sont chacun indépendamment un groupe hydrocarboné), et
une unité constitutive (a32) dérivée d'un autre monomère insaturé (a32) copolymérisable avec le monomère (a31), et
(1) la teneur du cuivre et/ou du composé inorganique de cuivre (b1) est dans la plage de 100 à 400, préférablement 100 à 350, et plus préférablement 100 à 300 parties en poids, et la teneur de l'oxyde de zinc (C) est dans la plage de 50 à 350, préférablement 75 à 350, et plus préférablement 100 à 350 parties en poids, chaque teneur étant basée sur 100 parties en poids du copolymère hydrolysable (A), et
(2) le rapport en poids de l'oxyde de zinc (C) sur le cuivre et/ou le composé inorganique de cuivre (b1) (oxyde de zinc (C)/(cuivre et/ou composé inorganique de cuivre (b1))) est dans la plage de 0,8 à 1,2.

2. Composition de revêtement anti-salissures selon la revendication 1, comprenant en outre au moins un des composants suivants :
- un agent anti-salissures organique (b2) ;
- au moins un pigment de charge choisi parmi le groupe consistant en un talc, une argile, un carbonate de calcium, un carbonate de baryum, une terre de diatomées et une silice ;
- un plastifiant ;
- au moins un pigment de couleur qui est de type organique ou de type inorganique.

3. Composition de revêtement anti-salissures selon la revendication 2, dans laquelle :
le cuivre et/ou le composé inorganique de cuivre (b1) est un oxyde cuprique ;
l'agent anti-salissures organique (b2) est au moins un composé choisi parmi le groupe consistant en un composé pyrithione, un bore tri-organique et son complexe aminé, et une 4,5-dichloro-2-n-octyl-4-isothiazolin-3-one, et est préférablement choisi parmi le groupe consistant en la pyrithione de cuivre, la pyrithione de zinc, un complexe triphénylbore-pyridine, un complexe méthyldiphénylbore-4-isopropylpyridine et une 4,5-dichloro-2-octyl-4-isothiazolin-3-one ;
le plastifiant est une paraffine chlorée et/ou un terpène-phénol ; et
le pigment de couleur est au moins un composé choisi parmi le groupe consistant en un oxyde de fer rouge, un blanc de titane, un oxyde de fer jaune et un pigment organique.

4. Composition de revêtement anti-salissures selon la revendication 2 ou 3, dans laquelle, sur la base de 100 parties en poids du copolymère hydrolysable (A) :
- la teneur de l'agent anti-salissures organique (b2) est dans la plage de 10 à 500 parties en poids,
- la teneur du pigment de charge est dans la plage de 10 à 100 parties en poids, et
- dans laquelle la teneur du plastifiant est dans la plage de 0,05 à 40 parties en poids.

5. Composition de revêtement anti-salissures selon l'une quelconque des revendications 1 à 4, dans laquelle le copolymère contenant une liaison ionique métallique (a1) a une unité constitutive (IV) dérivée d'un (méth)acrylate métallique d'acide monobasique représenté par la formule (IV) :
CH₂=C(R²) -COO-M-O-COR¹ (IV)
dans laquelle R¹ est un groupe organique,
sous réserve que le cas dans lequel R¹ est -CH=CH₂ ou -C(CH₃)=CH₂ est exclu,
R² est un atome d'hydrogène ou un groupe méthyle, et M est le zinc ou le cuivre, et
facultativement une unité constitutive (a12) dérivée d'au moins un composé insaturé choisi parmi le groupe consistant
en un (méth)acrylate d'alkyle, un (méth)acrylate d'alcoxyalkyle et un (méth)acrylate d'hydroxyalkyle.

6. Composition de revêtement anti-salissures selon l'une quelconque des revendications 1 à 5, dans laquelle le groupe organique R¹ dans le copolymère contenant une liaison ionique métallique (a1) est un groupe hydrocarboné monovalent aliphatique saturé ou insaturé ayant 2 à 30 atomes de carbone, qui peut être substitué, un groupe hydrocarboné monovalent alicyclique saturé ou insaturé ayant 3 à 30 atomes de carbone, qui peut être substitué, ou un groupe hydrocarboné monovalent aromatique ayant 6 à 30 atomes de carbone, qui peut être substitué,
préférablement, le groupe organique R¹ est un groupe hydrocarboné monovalent aliphatique saturé ou insaturé ou alicyclique saturé ou insaturé ayant 9 à 20 atomes de carbone, qui peut être substitué, et
plus préférablement, le groupe organique R¹ est un résidu d'au moins un acide monobasique (R¹COOH) choisi parmi le groupe consistant en l'acide versatique, l'acide palmitique, l'acide stéarique, l'acide isostéarique, l'acide oléique, l'acide linoléique, l'acide linolénique, l'acide abiétique, l'acide néoabiétique, l'acide pimarique, l'acide déshydroabiétique, l'acide 12-hydroxystéarique et l'acide naphténique.

7. Composition de revêtement anti-salissures selon l'une quelconque des revendications 1 à 6, dans laquelle la teneur totale de zinc et de cuivre dans le copolymère contenant une liaison ionique métallique (a1) et/ou (a2) est dans la plage de 0,5 à 20% en poids.

8. Composition de revêtement anti-salissures selon l'une quelconque des revendications 1 à 7, dans laquelle :
- le monomère (a21) apte à dériver l'unité constitutive (a21) dans le copolymère contenant une liaison ionique métallique (a2) est au moins un composé choisi parmi le groupe consistant en un (méth)acrylate de zinc et un (méth)acrylate de cuivre, et/ou
- l'autre monomère insaturé (a22) apte à dériver l'unité constitutive (a22) dans le copolymère contenant une liaison ionique métallique (a2) est
un (méth)acrylate métallique d'acide monobasique (IV) représenté par la formule (IV) :
CH₂=C(R²) -COO-M-O-COR¹ (IV)
dans laquelle R¹ est un groupe organique, R² est un atome d'hydrogène ou un groupe méthyle, et M est le zinc ou le cuivre, et/ou
au moins un composé insaturé choisi parmi le groupe consistant en un (méth)acrylate d'alkyle, un (méth)acrylate d'alcoxyalkyle et un (méth)acrylate d'hydroxyalkyle et préférablement choisi parmi le groupe consistant en un (méth)acrylate de méthyle, un (méth)acrylate d'éthyle, un (méth)acrylate de butyle et un (méth)acrylate de 2-hydroxyéthyle.

9. Composition de revêtement anti-salissures selon l'une quelconque des revendications 1 à 8, dans laquelle le copolymère contenant une liaison ionique métallique (a2) est un copolymère ayant :
comme l'unité constitutive (a21), une unité constitutive dérivée d'au moins un composé choisi parmi le groupe consistant en un (méth)acrylate de zinc et un (méth)acrylate de cuivre, et
comme l'unité constitutive (a22) :
- une unité constitutive dérivée d'au moins un composé insaturé choisi parmi le groupe consistant en un (méth)acrylate de méthyle, un (méth)acrylate d'éthyle, un (méth)acrylate de butyle et un (méth)acrylate de 2-hydroxyéthyle ou
- une unité constitutive dérivée d'un (méth)acrylate métallique d'acide monobasique (IV) représenté par la formule (IV) :
CH₂=C(R²)-COO-M-O-COR¹ (IV)
dans laquelle R¹ est un groupe organique, R² est un atome d'hydrogène ou un groupe méthyle, et M est le zinc ou le cuivre.

10. Composition de revêtement anti-salissures selon la revendication 9, dans laquelle le copolymère contenant une liaison ionique métallique (a2) est un copolymère ayant, comme les unités constitutives (a22), une unité constitutive dérivée d'un (méth)acrylate métallique d'acide monobasique (IV) représenté par la formule (IV) selon la revendication 9, et
une unité constitutive dérivée d'au moins un composé insaturé choisi parmi le groupe consistant en un (méth)acrylate d'alkyle, un (méth)acrylate d'alcoxyalkyle et un (méth)acrylate d'hydroxyalkyle, préférablement choisi parmi le groupe consistant en un (méth)acrylate de méthyle, un (méth)acrylate d'éthyle, un (méth)acrylate de butyle et un (méth)acrylate de 2-hydroxyéthyle.

11. Composition de revêtement anti-salissures selon l'une quelconque des revendications 8 à 10, dans laquelle le groupe organique R¹ dans le (méth)acrylate métallique d'acide monobasique (IV) est un groupe hydrocarboné monovalent aliphatique saturé ou insaturé ou alicyclique saturé ou insaturé ayant 9 à 20 atomes de carbone, qui peut être substitué, et R¹ est préférablement un résidu d'au moins un acide monobasique (R¹COOH) choisi parmi le groupe consistant en l'acide versatique, l'acide palmitique, l'acide stéarique, l'acide isostéarique, l'acide oléique, l'acide linoléique, l'acide linolénique, l'acide abiétique, l'acide néoabiétique, l'acide pimarique, l'acide déshydroabiétique, l'acide 12-hydroxystéarique et l'acide naphténique.

12. Composition de revêtement anti-salissures selon l'une quelconque des revendications 1 à 11, dans laquelle le monomère (a31) apte à dériver l'unité constitutive (a31) dans le composé d'ester silylique (a3) est un (méth)acrylate de trialkylsilyle, le (méth)acrylate de trialkylsilyle étant préférablement un (méth)acrylate de triisopropylsilyle, et/ou
dans laquelle l'autre monomère insaturé (a32) apte à dériver l'unité constitutive (a32) dans le composé d'ester silylique (a3) est au moins un composé insaturé choisi parmi le groupe consistant en un (méth)acrylate d'alkyle, un (méth)acrylate d'alcoxyalkyle et un (méth)acrylate d'hydroxyalkyle, préférablement choisi parmi le groupe consistant en un (méth)acrylate de méthyle, un (méth)acrylate d'éthyle, un (méth)acrylate de butyle et un (méth)acrylate de 2-hydroxyéthyle.

13. Film de revêtement anti-salissures formé à partir de la composition de revêtement anti-salissures selon l'une quelconque des revendications 1 à 12.

14. Procédé de formation d'un film de revêtement sur une surface d'un substrat, dans lequel le substrat est préférablement une structure sous-marine, un placage extérieur de navire, un filet de pêche ou un matériel de pêche, lequel procédé comprend le revêtement ou l'imprégnation d'une surface du substrat avec la composition de revêtement anti-salissures selon l'une quelconque des revendications 1 à 12 et ensuite le durcissement de la composition pour former un film de revêtement.

15. Substrat avec un film de revêtement pouvant être obtenu par le procédé selon la revendication 14.
